# EUROPÄISCHE PATENTSCHRIFT

(11) **EP 2 268 472 B1**
(45) Veröffentlichungstag und Bekanntmachung des Hinweises auf die Patenterteilung: **19.07.2017**
(21) Anmeldenummer: 09729424.3
(22) Anmeldetag: 09.04.2009
(51) Int. Cl.: B29C 45/26, B29C 45/00, B29L 1/00

(54) **VERFAHREN ZUR HERSTELLUNG EINES FORMTEILS MIT RINGFÖRMIGEM QUERSCHNITT UND FORMTEIL NACH EINEM SOLCHEN VERFAHREN**
METHOD FOR PRODUCING A MOULDED PART WITH AN ANNULAR CROSS-SECTION AND MOULDED PART PRODUCED ACCORDING TO A METHOD OF THIS TYPE
PROCÉDÉ DE FABRICATION D'UNE PIÈCE MOULÉE DOTÉE D'UNE SECTION TRANSVERSALE ANNULAIRE ET PIÈCE MOULÉE FABRIQUÉE SELON UN PROCÉDÉ DE CE TYPE

(30) Priorität: 12.04.2008 DE 102008018514
(43) Veröffentlichungstag der Anmeldung: 05.01.2011
(73) Patentinhaber: Voss Automotive GmbH, 51688 Wipperfürth (DE)
(72) Erfinder: WITTE, Peik-Christian, 51465 Bergisch Gladbach (DE); SIEPER, Günter, 42853 Remscheid (DE)
(74) Vertreter: Patent- und Rechtsanwälte Dr. Solf & Zapf
(86) Internationale Anmeldenummer: PCT/EP2009/054289
(87) Internationale Veröffentlichungsnummer: WO 2009/124994

(56) Entgegenhaltungen:
- EP-A- 0 406 011
- EP-A- 0 913 618
- EP-A- 1 484 152
- EP-A1- 0 929 389
- JP-A- 62 148 219

## Beschreibung

Die vorliegende Erfindung betrifft ein Verfahren zur Herstellung eines Formteils mit rotationssymmetrischem oder zumindest teilweise ringförmigem Querschnitt, wie einer Mutter, eines Muffenteils, eines Rohrsteckers, eines Rohrverbinders oder dergleichen, welches als Schraubteil mit mindestens einem Gewinde ausgebildet ist und einen hohlzylindrischen Grundkörper mit einem endständigen, radial aufgeweiteten Flanschansatz aufweist, wobei eine Fasern enthaltende plastifizierte polymere Masse durch drei umfangsgemäß um 120° zueinander versetzte Einspritzöffnungen eines Formwerkzeugs in mindestens eine Kavität des Formwerkzeugs eingespritzt und nach einem Erstarren der polymeren Masse das Formteil aus dem Werkzeug entformt wird. Des Weiteren betrifft die Erfindung ein nach einem solchen Verfahren herstellbares Formteil.

Das Spritzgießen (engl.: "injection molding") ist ein bekanntes, beispielsweise für Kunststoffe eingesetztes, diskontinuierliches Urformverfahren. Das Spritzgießen gestattet es, industriell unmittelbar einsetzbare Formteile in großer Stückzahl und mit hoher Genauigkeit herstellen. Dazu wird in einer Spritzeinheit einer Spritzgießmaschine der jeweilige Werkstoff bzw. die Formmasse plastifiziert und in ein Spritzgießwerkzeug eingespritzt. Moderne Spritzgießmaschinen arbeiten mit einer Schnecke, die die Formmasse plastifiziert, fördert und in das Werkzeug einspritzt. In der Kavität bzw. Formhöhlung des Werkzeugs kommt es zu einem Erstarren der polymeren Masse, wonach das Formteil aus dem Werkzeug entformt werden kann. Eine beim Erstarren entstehende Volumenschwindung kann grundsätzlich - jedoch nur bis zu einem bestimmten Maß - durch einen vor der Entnahme aufgebrachten Nachdruck ausgeglichen werden.

Durch Spritzgießen können Thermoplaste, Duroplaste und Elastomere verarbeitet werden. Es ist auch bekannt, beim Spritzgießen von Thermoplasten Fasern enthaltende Massen einzusetzen, wodurch vergleichsweise höherfeste Formteile hergestellt werden können. Die Massetemperatur beträgt beim Spritzgießen etwa 100 °C bis 350 °C, der Spritzdruck etwa 400 bar bis 1600 bar und die Werkzeugtemperatur etwa 40 °C bis 160 °C. Bei der Verarbeitung von Thermoplasten ist die Schnecke relativ warm, um das thermoplastische Material zu schmelzen. Das Werkzeug hingegen ist relativ kalt, um das gerade entstandene Formteil abzukühlen. Bei der Verarbeitung von Duroplasten muss die Temperatur der Plastifiziereinheit dem Fließ-Härtungsverhalten angepasst werden und liegt daher im Allgemeinen niedriger als bei Thermoplasten, während das Werkzeug heißer gehalten werden muss als die Spritzeinheit, damit die Masse dort aushärten kann.

Im Gegensatz zum Kalandrieren, mit dem in der Regel nur ebene Schichten uniformer Dicke erzeugt werden, bestimmt beim Spritzgießen der Hohlraum des Werkzeugs, die sogenannte Kavität, die Form und die Oberflächenstruktur des fertigen Teils, so dass durch Spritzgießen Formteile der eingangs genannten Art - mit rotationsymmetrischem oder insbesondere mindestens teilweise ringförmigem Querschnitt - in einem Arbeitsgang herstellbar sind. Dazu erfolgt das Einspritzen der plastifizierten polymeren Masse in die Kavität durch eine Einspritzöffnung, wobei die Masse ringförmig einen inneren Kern des Werkzeugs umströmt und auf der der Einspritzöffnung gegenüberliegenden Seite zusammenfließt. An dieser Stelle entsteht eine Bindenaht, die in der Regel eine geringere Festigkeit aufweist als der übrige Körper des Formteils.

Aus der EP 1 484 152 A1 ist ein spritzgegossenes Getriebeteil bekannt. Das Dokument bezieht sich dabei auf ein System mit einem Rotationskörper aus spritzgegossenem Harz und einer Matrize zur Formung des Rotationskörpers durch Spritzen eines verstärkten faserhaltigen Harzmaterials aus einer Vielzahl von Nadelpunkt-Angüssen in einen Hohlraum der Matrize, wobei der Rotationskörper Folgendes umfasst:
- einen äußeren zylindrischen Abschnitt,
- einen Wellenlagerabschnitt zur Aufnahme und zum Lagern einer Welle darin,
- einen scheibenförmigen Abschnitt, der in radialen Richtungen wegführt, um den äußeren zylindrischen Abschnitt mit dem Wellenlagerabschnitt zu verbinden,
- eine Vielzahl von die Harzströmungsgeschwindigkeit regulierenden Nuten, von denen jede in einer Seite des scheibenförmigen Abschnitts ausgebildet ist, um so in der Nähe eines entsprechenden Angusses der Vielzahl von Nadelpunkt-Angüssen angeordnet zu sein, wenn das Harzmaterial von der Vielzahl von Nadelpunkt-Angüssen in den Hohlraum der Matrize eingespritzt wird, wobei jede der die Harzströmungsgeschwindigkeit regulierenden Nuten eine Form besitzt, die derjenigen eines die Harzströmungsgeschwindigkeit regulierenden Vorsprungs der Matrize entspricht, um die radiale Strömung des Harzmaterials zu begrenzen, das aus der Vielzahl von Nadelpunkt-Angüssen eingespritzt wird, um zu bewirken, dass das Harzmaterial mit einer gleichförmigen Geschwindigkeit in radialen Richtungen zwischen dem jeweiligen Nadelpunkt-Anguss und einem Abschnitt des Hohlraums, der dem äußeren zylindrischen Abschnitt entspricht, strömt,
- eine erste Ringnut, die in der einen Seite des scheibenförmigenAbschnitts in radialen Richtungen außerhalb der Vielzahl von dieHarzströmungsgeschwindigkeit regulierenden Nuten ausgebildet ist, so dass sie konzentrisch mit dem äußeren zylindrischen Abschnitt ist,
- und eine zweite Ringnut, die in der einen Seite des scheibenförmigenAbschnitts in radialen Richtungen innerhalb der Vielzahl von die Harzströmungsgeschwindigkeit regulierenden Nuten ausgebildet ist, so dass sie konzentrisch zu dem äußeren zylindrischen Abschnitt ist, wobei die Vielzahl von Nadelpunkt-Angüssen zwischen der Vielzahl von die Harzströmungsgeschwindigkeit regulierenden Nuten und der zweiten Ringnut angeordnet ist, wenn das Harzmaterial von der Vielzahl von Nadelpunkt-Angüssen eingespritzt wird, und wobei jede der die Harzströmungsgeschwindigkeit regulierenden Nuten einen ersten Nutabschnitt, der so angeordnet ist, dass er einem entsprechendender Vielzahl von Nadelpunkt-Angüssen in radialen Richtungen zugewandt ist, wenn das Harzmaterial von der Vielzahl von Nadelpunkt-Angüssen eingespritzt wird, und ein Paar zweiter Nutabschnitte aufweist, von denen jeder von einem Ende des ersten Nutabschnitts in einer Umfangsrichtung verläuft, um so eine allmählich abnehmende Nuttiefe zu besitzen; und wobei der erste Nutabschnitt eine untere Seite besitzt, die eine flache Fläche parallel zu dem scheibenförmigen Abschnitt darstellt.

Durch das System der umfangsgemäß verlaufenden Nuten soll die Harzströmungsgeschwindigkeit in radialer Richtung reguliert werden. Der Fluss des Harzes erfolgt also vorwiegend in radialer Richtung, wobei es durch die umfangsgemäß verlaufenden Nuten zusätzlich möglich ist, eine Orientierung der Verstärkungsfasern. In Umfangsrichtung zu erzielen.

Der vorliegenden Erfindung liegt die Aufgabe zu Grunde, ein Verfahren der eingangs genannten Art zu schaffen, durch das bei technologisch einfacher Durchführbarkeit und vorzugsweise auch optimiertem Schwund und Verzug beim Erstarren der polymeren Masse ein Formteil mit rotationsymmetrischem, insbesondere mit ringförmigem oder zumindest teilweise ringförmigem, Querschnitt, wie eine Mutter, ein Muffenteil, ein Rohrstecker, ein Rohrverbinder oder dergleichen, mit in Beanspruchungsrichtung erhöhter Festigkeit herstellbar ist.

Erfindungsgemäß wird diese Aufgabe im Hinblick auf ein Verfahren der eingangs genannten Art dadurch gelöst, dass die die Fasern enthaltende plastifizierte polymere Masse durch die drei umfangsgemäß um 120° zueinander versetzten Einspritzöffnungen des Formwerkzeugs, die im Bereich eines Endes des Formteils im Bereich des endständigen radial aufgeweiteten Flanschansatzes angeordnet sind, in die mindestens eine Kavität des Formwerkzeugs axial eingespritzt und nach einem Erstarren der polymeren Masse das Formteil aus dem Werkzeug entformt wird, wobei die plastifizierte polymere Masse einen Volumenanteil an Fasern im Bereich von 2,5 bis 60 Prozent enthält, wobei die Fasern eine mittlere Länge im Bereich von 0,1 mm bis 1,5 mm aufweisen, so dass sich beim Einspritzen in die Kavität die Fasern vorwiegend entsprechend den Hauptbeanspruchungsrichtungen axialer Zug und Torsion des Formteils ausrichten, indem ein Anteil von Fasern, die in umfangsgemäßer Richtung des ringförmigen Querschnitts rechtwinklig zu einer Längsachse des Formteils orientiert sind, kleiner ist als 50 Prozent, und ein Anteil von Fasern, die in axialer Richtung des Formteils orientiert sind, ebenfalls kleiner ist als 50 Prozent.
Des Weiteren wird diese Aufgabe erfindungsgemäß im Hinblick auf das nach dem erfindungsgemäßenVerfahren herstellbaren Formteil dadurch gelöst, dass ein Anteil von Fasern, die in umfangsgemäßer Richtung des ringförmigen Querschnitts rechtwinklig zu einer Längsachse des Formteils orientiert sind, kleiner ist als 50 Prozent und dass ein Anteil von Fasern, die in axialer Richtung des ringförmigen Querschnitts des Formteil orientiert sind, ebenfalls kleiner ist als 50 Prozent, so dass die Fasern vorwiegend entsprechend den Hauptbeanspruchungsrichtungen axialer Zug und Torsion des Formteils ausgerichtet sind. Das Formteil, wie eine Mutter, ein Muffenteil, ein Rohrstecker, ein Rohrverbinder oder dergleichen, hat dabei einen rotationssymmetrischen, insbesondere zumindest teilweise ringförmigem, Querschnitt und ist als Schraubteil mit mindestens einem Gewinde ausgebildet. Es weist einen hohlzylindrischen Grundkörper mit einem endständigen, radial aufgeweiteten Flanschansatz auf, wobei der Grundkörper aus einer polymeren Matrix besteht, in welche Fasern in einem Volumenanteil im Bereich von 2,5 bis 60 Prozent eingebettet sind, wobei die Fasern eine mittlere Länge im Bereich von 0,1 mm bis 1,5 mm aufweisen.

Bevorzugt ist ein Anteil von Fasern, die in umfangsgemäßer Richtung des ringförmigen Querschnitts rechtwinklig zu einer Längsachse des Formteils orientiert sind, der kleiner ist als 30 Prozent und ein Anteil von Fasern, die in axialer Richtung des ringförmigen Querschnitts des Formteil orientiert sind, der ebenfalls kleiner ist als 30 Prozent.

Die Erfindung beruht auf der Erkenntnis, dass - entgegen der herrschenden Auffassung, dass in einem Formteil der eingangs genannten Art nur eine Bindenaht vorgesehen werden soll, weil diese eine geringere Festigkeit aufweist als der übrige Körper des Formteils - durch das erfindungsgemäße Verfahren Formteilen mit ringförmigem Querschnitt im Hinblick auf die Belastungen, denen sie im Einsatzfall ausgesetzt sind, eine vergleichsweise höhere Festigkeit verliehen werden kann. Dies geschieht, indem die Faserausrichtung in der plastifizierten polymeren Masse mittels des Einspritzens durch drei Einspritzöffnungen gezielt und in beanspruchungsgerecht optimaler Weise eingestellt wird, weil die Fasern, und zwar sogenannte Kurzfasern mit einer Faserlänge von 0,1 bis 1,5 mm, sich beim Einspritzen in die Kavität in hohem Maß entlang von Fließlinien der plastifizierten polymeren Masse orientieren.

Das erfindungsgemäße Formteil, in dem ein Anteil von Fasern, die in umfangsgemäßer Richtung des ringförmigen Querschnitts rechtwinklig zu einer Längsachse des Formteils orientiert sind, kleiner ist als 50 Prozent, vorzugsweise kleiner als 30 Prozent, und auch ein Anteil von Fasern, die in axialer Richtung des Formteils orientiert sind, ebenfalls kleiner ist als 50 Prozent, vorzugsweise kleiner als 30 Prozent, ist in optimaler Weise für Hauptbeanspruchungen auf axialen Zug und umfangsgemäße Torsion prädestiniert. Diese Hauptbeanspruchungen können dabei sukzessiv oder gleichzeitig auftreten.

Die plastifizierte polymere Masse enthält dabei einen Volumenanteil an Fasern im Bereich von 2,5 bis 60 Prozent, vorzugsweise im Bereich von 15 bis 50 Prozent, wobei die Fasern in Längsrichtung einen höheren Elastizitätsmodul und eine höhere Zugfestigkeit aufweisen als der polymere Matrixwerkstoff.

Das Einspritzen kann erfindungsgemäß insbesondere derart erfolgen, dass die Fasern in einer Abwicklung der Mantelfläche eines hohlzylindrischen Grundkörpers des Formteils, welche eine Breite entsprechend der Länge des Grundkörpers und eine Länge entsprechend dem Umfang des Grundkörpers aufweist, in drei, hinsichtlich der Orientierung der Fasern etwa gleichartig ausgebildeten Längenabschnitten der Abwicklung liegen. Hierbei kann insbesondere jeder Längenabschnitt hinsichtlich einer parallel zur Breite der Abwicklung und durch eine Einspritzöffnung verlaufenden Mittenachse eine im Hinblick auf die Orientierung der Fasern symmetrische Ausbildung besitzen, wobei im Bereich dieser Mittenachse eines jeden Längenabschnitts und in zu dieser Mittenachse parallel verlaufenden Randbereichen eines jeden Längenabschnitts die Fasern überwiegend, vorzugsweise zu über 60 Prozent, in Richtung des Verlaufs der Mittenachse des Längenabschnitts orientiert sind. In den Randbereichen eines jeden Längenabschnitts ist dabei jeweils eine Bindenaht zwischen aus unterschiedlichen Einspritzöffnungen eintretenden Anteilen der polymeren Masse gebildet. In den Bereichen zwischen der Mittenachse eines jeden Längenabschnitts und den dazu parallelen Randbereichen sind die Fasern überwiegend, vorzugsweise zu über 60 Prozent, schräg zur Richtung des Verlaufs der Mittenachse orientiert, was im Hinblick auf eine hohe Festigkeit bei Hauptbeanspruchungen des Formteils auf axialen Zug und umfangsgemäße Torsion von Vorteil ist.

Die Erfindung kann dabei mit Vorteil insbesondere Anwendung für in axialer Richtung schraubbare Befestigungsteile, wie beispielsweise Muttern, finden.

Weitere vorteilhafte Ausgestaltungsmerkmale der Erfindung sind in den Unteransprüchen sowie der folgenden Beschreibung enthalten.

Anhand mehrerer bevorzugter Ausführungsbeispiele soll im Folgenden die Erfindung näher erläutert werden. Dabei zeigen:
- Fig. 1: in perspektivischer Darstellung, als Vergleichsbeispiel ein bekanntes Formteil mit ringförmigem Querschnitt, insbesondere eine Mutter, herstellbar nach einem Spritzgießverfahren der bekannten Art,
- Fig. 2: in einer Darstellung wie in Fig. 1, eine Ausführung eines nicht erfindungsgemäßen Formteils,
- Fig. 3: in einer Fig. 1 und 2 entsprechenden Darstellung, eine Ausführung eines erfindungsgemäßen Formteils, herstellbar nach einem Spritzgießverfahren gemäß der Erfindung,
- Fig. 4: in perspektivischer Darstellung ähnlich wie in Fig. 1 bis 3, ein Füllbild einer Kavität eines Formwerkzeugs zur Herstellung eines Formteils nach Fig. 1, zu einem bestimmten Zeitpunkt des Spritzgießvorgangs,
- Fig. 5: in einer Darstellung wie in Fig. 4, ein Füllbild einer Kavität eines Formwerkzeugs zur Herstellung eines erfindungsgemäßen Formteils nach Fig. 2, zum gleichen Zeitpunkt des Spritzgießvorgangs wie in Fig. 4,
- Fig. 6: in einer Darstellung wie in Fig. 4 und 5, ein Füllbild einer Kavität eines Formwerkzeugs zur Herstellung eines erfindungsgemäßen Formteils nach Fig. 3, zum gleichen Zeitpunkt des Spritzgießvorgangs wie in Fig. 4 und 5,
- Fig. 7: in perspektivischer Darstellung ähnlich wie in Fig. 1 bis 6, jedoch vergrößert, eine Visualisierung der Faserorientierung in einem Formteil nach Fig. 1,
- Fig. 8: in Darstellung wie in Fig. 7, eine Visualisierung der Faserorientierung in einem Formteil nach Fig. 2,
- Fig. 9: in Darstellung wie in Fig. 7 und 8, eine Visualisierung der Faserorientierung in einem erfindungsgemäßen Formteil nach Fig. 3,
- Fig. 10: eine schematisierte Darstellung einer optimalen Faserorientierung für eine Beanspruchung eines Formteils auf Zug,
- Fig. 11: eine schematisierte Darstellung einer optimalen Faserorientierung für eine Beanspruchung eines Formteils auf Torsion,
- Fig. 12: eine schematisierte Darstellung der Faserorientierung in einem erfindungsgemäßen Formteil,
- Fig. 13: eine schematisierte Visualisierung der Faserorientierung in einer Abwicklung der Mantelfläche eines hohlzylindrischen Grundkörpers eines Formteils nach Fig. 1,
- Fig. 14: eine schematisierte Visualisierung der Faserorientierung in einer Abwicklung der Mantelfläche eines hohlzylindrischen Grundkörpers eines erfindungsgemäßen Formteils nach Fig. 3,
- Fig. 15: eine Darstellung von Schwindung und Verzug in Längsrichtung bei einem Formteil nach Fig. 1,
- Fig. 16: eine Darstellung von Schwindung und Verzug in Längsrichtung bei einem Formteil nach Fig. 2,
- Fig. 17: eine Darstellung von Schwindung und Verzug in Längsrichtung bei einem erfindungsgemäßen Formteil nach Fig. 3,
- Fig. 18 und19: im Längsschnitt, eine Darstellung einer weiteren Ausführung eines erfindungsgemäßen Formteils, herstellbar nach einem Spritzgießverfahren gemäß der Erfindung,
- Fig. 20: in perspektivischer Darstellung, eine weitere als Schraubteil ausgebildete Ausführungsform eines erfindungsgemäßen Formteils,
- Fig. 21: eine vergleichende diagrammatische Darstellung von Losdrehmomenten, welche verschiedene als Schraubteile ausgebildete Ausführungsformen eines erfindungsgemäßen Formteils aufweisen, wenn eine Schraubverbindung des jeweiligen Formteils mit einem weiteren Bauteil gelöst wird,
- Fig. 22 bis 24: jeweils im Längsschnitt, Darstellungen weiterer als Schraubteile ausgebildeter Ausführungsformen eines erfindungsgemäßen Formteils,
- Fig. 25 und: 26 ebenfalls jeweils im Längsschnitt, Darstellungen weiterer als Schraubteile, jedoch gleichzeitig zur Herstellung von Steckverbindungen ausgebildeter Ausführungsformen eines erfindungsgemäßen Formteils.

In den verschiedenen Figuren der Zeichnung sind gleiche Teile stets mit den gleichen Bezugszeichen versehen, so dass sie in der Regel auch nur einmal beschrieben werden.

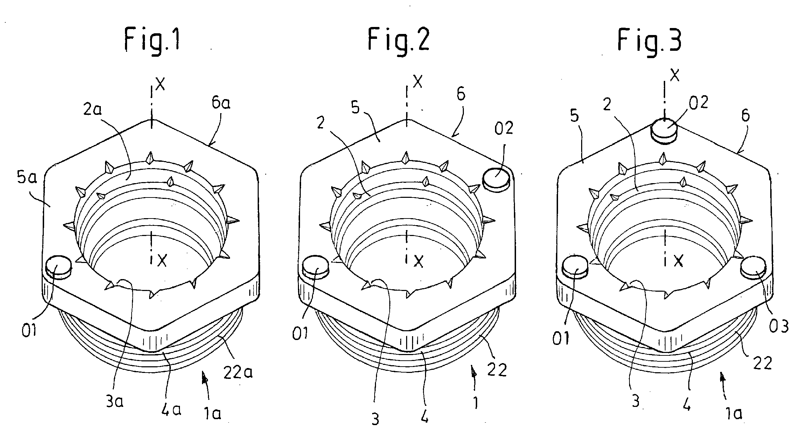

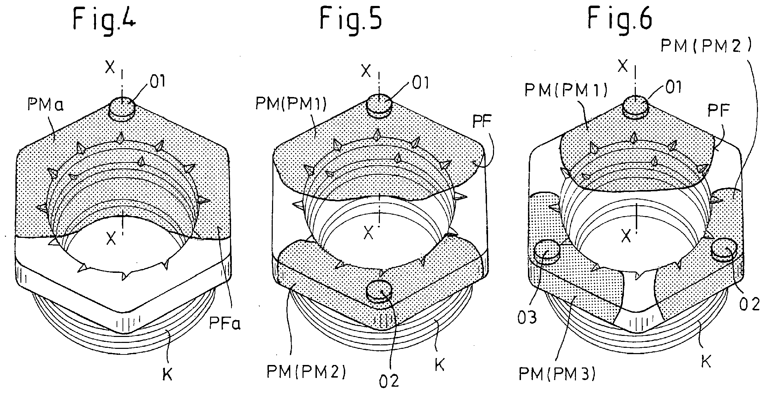

Fig. 1 zeigt zunächst als Vergleichsbeispiel ein bekanntes Formteil 1a mit ringförmigem Querschnitt, insbesondere eine Mutter, das nach einem Spritzgussverfahren der bekannten Art herstellbar ist. Auf diese Ausführung beziehen sich im Weiteren auch Fig. 4, 7, 13 und 15.

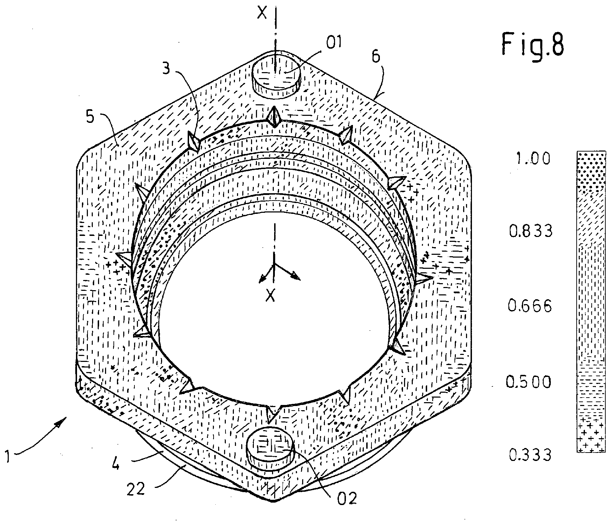

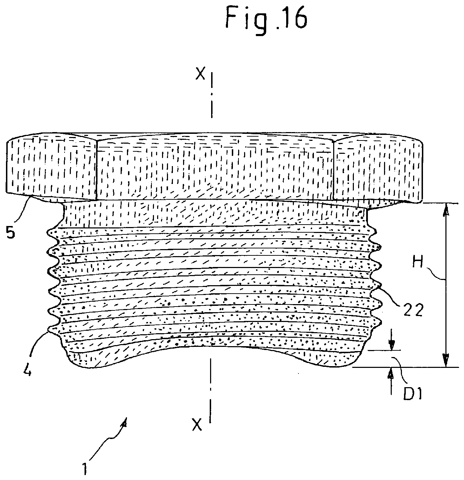

Fig. 2 zeigt als weiteres Vergleichsbeispiel eine Ausführung eines Formteils 1, das die gleiche Raumgestalt wie das als erstes Vergleichsbeispiel dargestellte Formteil 1a aufweist und nach einem Spritzgussverfahren herstellbar ist. Auf diese Ausführung beziehen sich im Weiteren auch Fig. 5, 8, 12, und 16.

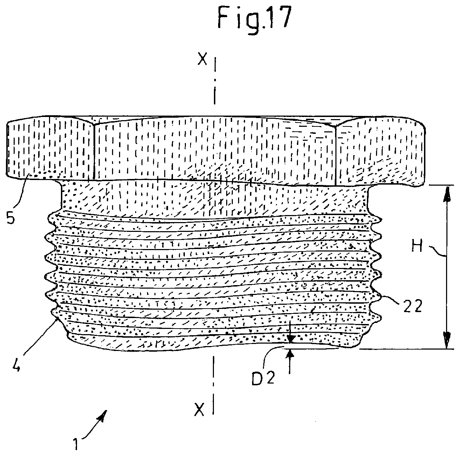

Fig. 3 zeigt eine Ausführung eines erfindungsgemäßen Formteils 1, das die gleiche Raumgestalt wie die als Vergleichsbeispiel dargestellten Formteile 1 a, 1 aufweist und nach einem Spritzgussverfahren der erfindungsgemäßen Art herstellbar ist. Auf diese Ausführung beziehen sich im Weiteren auch Fig. 6, 9, 12, 14 und 17.

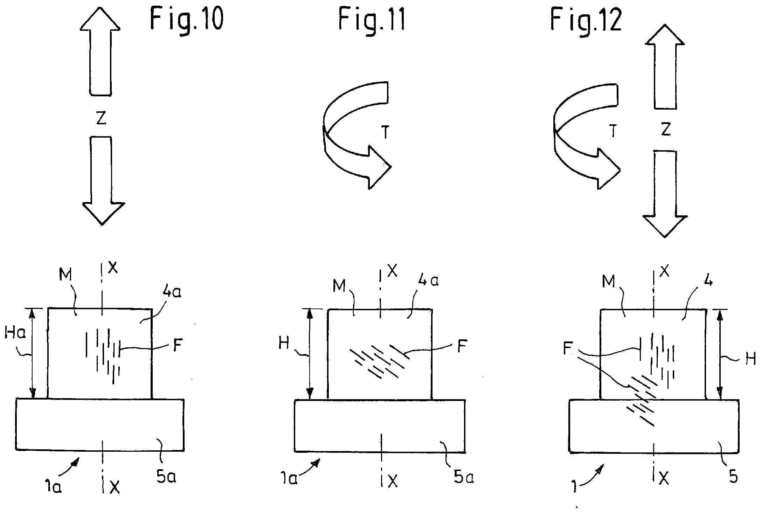

Bei den zunächst in Fig. 1 bis Fig. 3 dargestellten Formteilen 1a, 1 handelt es sich um Formteile 1, 1a, die aus einer polymeren Matrix, in welche Fasern eingebettet sind, bestehen. Die Fasern sind in Fig. 10 bis 12 mit dem Bezugszeichen F bezeichnet.

Zur Herstellung dieser Formteile 1, 1a wird eine die Fasern F enthaltende plastifizierte polymere Masse durch eine Einspritzöffnung eines Formwerkzeugs in eine Kavität des Formwerkzeugs eingespritzt und nach einem Erstarren der polymeren Masse das Formteil aus dem Werkzeug entformt. Der Hohlraum, die Kavität, die in Fig. 4 bis 6 angedeutet und mit dem Bezugszeichen K bezeichnet ist, bestimmt dabei die Form und die Oberflächenstruktur des fertigen Teils 1 a, 1. Die polymere Masse ist in den genannten Figuren entsprechend mit dem Bezugszeichen PMa und PM bezeichnet.

Bei dem bekannten Formteil 1a erfolgt das Einspritzen, wie Fig. 1 und auch Fig. 4 zeigen, in die Kavität K durch eine einzige Einspritzöffnung O1. Bei dem Formteil gemäß Fig. 2 erfolgt das Einspritzen in die Kavität K durch zwei Einspritzöffnungen O1, O2

Gemäß der Erfindung erfolgt das Einspritzen in die Kavität K durch drei Einspritzöffnungen O1, 02, 03, und zwar derart, dass sich die Fasern F vorwiegend in entsprechend den Hauptbeanspruchungsrichtungen axialer Zug und Torsion des Formteils 1 ausrichten, was nachfolgend unter Bezugnahme auf Fig. , 9 bis 12 und 14 noch im Detail erläutert wird. Die Hauptbeanspruchungsrichtungen sind in Fig. 10 bis 12 durch Pfeile symbolisiert und mit den Bezugszeichen Z für Zug und T für Torsion bezeichnet.

An den Formteilen 1a, 1 sind Gewinde, wie in Fig. 1 bis 3 dargestellt - mindestens ein Innengewinde 2a, 2, mindestens ein Außengewinde 22a, 22 und zusätzlich gegebenenfalls innere Ausnehmungen - wie die dargestellten Einkerbungen 3a, 3 - gegebenenfalls äußere Ausnehmungen, wie Umfangsnuten und/oder gegebenenfalls innere Stufen oder äußere Stufen, wie radiale Vor- oder Rücksprünge, ausgebildet sein.

Die Formteile 1 a, 1 besitzen jeweils einen Grundkörper 4a, 4 mit der Gestalt eines Hohlzylinders, welcher eine Längsachse aufweist, die mit den Bezugszeichen X-X gekennzeichnet ist. Am Grundkörper 4a, 4 befindet sich dabei jeweils ein endständiger radial aufgeweiteter Flanschansatz 5a, 5, der - wie dargestellt - eine hexagonale Außenkontur 6a, 6 zum Angriff eines Werkzeugs besitzen kann. Der Hohlzylinder könnte beispielsweise auch eine runde, trilobulare oder andersartig polygonale Außenkontur aufweisen.

Gemäß der Ausführung in Fig. 2 und 5 ist vorgesehen, dass das Einspritzen in die Kavität K durch zwei Einspritzöffnungen O1, 02 erfolgt, die einander diametral gegenüberliegen.

Gemäß der Ausführung der Erfindung ist, wie Fig. 3 und 6 zeigen, vorgesehen, dass das Einspritzen in die Kavität K durch drei Einspritzöffnungen O1, 02, 03 erfolgt, die auf dem ringförmigen Querschnitt des Formteils 1 umfangsgemäß um 120° zueinander versetzt sind.

Zur Herstellung eines erfindungsgemäßen Formteils 1 kann die plastifizierte polymere Masse PM ein Harz sein, welches eine duroplastische Matrix des Formteils 1 bildet. Eine solche Matrix ist in Fig. 10 bis 12 mit dem Bezugszeichen M bezeichnet.

Als Harze zur Bildung einer duroplastischen Matrix M können insbesondere Epoxidharze (EP), ungesättigte Polyesterharze (UP), Vinylesterharze (VE), Phenol-Formaldehydharze (PF), Diallylphthalatharze (DAP), Methacrylatharze (MMA), Polyurethane (PUR), Amino- bzw. insbesondere Melaminharze (MF/MP) oder Harnstoffharze (UF) eingesetzt werden.

Formteile 1 mit duroplastischer Matrix M lassen sich nach dem Aushärten bzw. dem Vernetzen der Matrix M nicht mehr umformen. Sie weisen jedoch einen hohen Temperatureinsatzbereich und höchste Festigkeiten auf. Dies gilt besonders für heißhärtende Systeme, die unter hohen Temperaturen ausgehärtet werden. Die Temperatureinsatzgrenze wird dabei durch die Lage der Glasübergangstemperatur bestimmt.

Zur Herstellung eines erfindungsgemäßen Formteils 1 kann auch vorgesehen sein, dass die plastifizierte polymere Masse PM ein Kunststoff ist, welcher eine thermoplastische Matrix M des Formteils 1 bildet. In einem solchen Fall sind zwar zur Bildung der Matrix M grundsätzlich alle üblicherweise für konstruktive Zwecke eingesetzten Thermoplaste verwendbar, jedoch ist es von besonderem Vorteil, wenn die plastifizierte polymere Masse PM ein Polyetheretherketon (PEEK), ein Polyphenylensulfid (PPS), ein Polysulfon (PSU), ein Polyarylamid (PARA), ein Polyphtalamid (PPA), ein Polyetherimid (PEI), ein Polyethylenterephtalat (PET), ein Polyoxymethylen (POM) oder ein Polybutylenterephtalat (PBT) ist.

Faserverstärkte Kunststoffe mit einer thermoplastischen Matrix M lassen sich nachträglich umformen oder verschweißen. Nach dem Abkühlen der Matrix M sind die Formteile 1 einsatzbereit, erweichen jedoch bei erhöhter Temperatur. Mit zunehmendem Gehalt an Fasern F sinkt dabei ihre Neigung zum Kriechen. Der Vorteil der als bevorzugt genannten thermoplastischen Werkstoffe besteht dabei insbesondere in einer hohen Matrixfestigkeit und Einsatzmöglichkeit bei erhöhter Temperaturbelastung.

Als Fasern F können sowohl isotrope Fasern F, wie Glasfasern, als auch anisotrope Fasern, wie Kohlenstofffasern, eingesetzt werden. Die plastifizierte polymere Masse PM enthält dabei einen Volumenanteil an Fasern F im Bereich von 2,5 bis 60 Prozent, vorzugsweise im Bereich von 15 bis 50 Prozent.

Die Fasern F weisen eine mittlere Länge im Bereich von 0,1 mm bis 1,5 mm, vorzugsweise im Bereich von 0,3 bis 0,7 mm, auf. Es handelt sich dabei um so genannte Kurzfasern oder Kurzschnittfasern, die direkt mit einem Extruder verarbeitet werden können, wobei auch thermoplastische Granulate zur Anwendung kommen können, die bereits einen gewünschten Faservolumenanteil bzw. Fasermassenanteil an Kurzfasern enthalten.

Ein mittlerer Durchmesser der Fasern F kann im Bereich von etwa 3 bis 35 µm, vorzugsweise im Bereich von 5 bis 15 µm, liegen.

Anisotrope Fasern, insbesondere Kohlenstofffasern werden eingesetzt, wenn hohe massebezogene Festigkeiten und Steifigkeiten gefordert sind. Bei Kohlenstofffasern, die üblicherweise einen Durchmesser von etwa 5 bis 8 µm aufweisen und heute in überwiegendem Maß aus Polyacrylnitril gefertigt werden, sind die Festigkeit und Steifigkeit in Faserrichtung wesentlich höher als quer zur Faserrichtung. Ihr wesentliches Merkmal ist dabei eine hohe Zugfestigkeit.

Erfindungsgemäß kann auch vorgesehen sein, dass als Fasern F Aramidfasern eingesetzt werden. Als Aramide oder aromatische Polyamide werden nach einer Definition der U. S. Federal Trade Commission langkettige synthetische Polyamide bezeichnet, bei denen mindestens 85 Prozent der Amidgruppen direkt an zwei aromatische Ringe gebunden sind. Aramidfasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul ist niedriger als die von Kohlenstofffasern. In Verbindung mit dem positiven Ausdehnungskoeffizienten des Materials der Matrix M lassen sich jedoch hoch maßhaltige Formteile 1 fertigen. Gegenüber kohlenstofffaserhaltigen Formteilen 1 ist die Druckfestigkeit solcher Formteile 1 jedoch geringer.

Fig. 4 bis 6 zeigen jeweils ein Füllbild einer Kavität K eines Formwerkzeugs zur Herstellung eines bekannten Formteils 1 a, 1 bzw. eines erfindungsgemäßen Formteils 1 zu einem bestimmten Zeitpunkt des Spritzgießvorgangs.

Konkret wurde dabei bei einer Temperatur der polymeren Masse PM von etwa 340 °C und einer Werkzeugtemperatur von etwa 145 °C eine Gesamteinspritzzeit von 1,3 s realisiert, an die sich eine Kühlzeit von 20 s anschloss. Als thermoplastischer Kunststoff wurde ein Polyphenylensulfid (PPS) der Firma Ticona mit der Bezeichnung Fortron® 1140 L4 eingesetzt, welcher 40 Prozent Glasfasern enthält. Neben den bereits beschriebenen Vorteilen weist ein solcher Werkstoff auch eine hohe Chemikalienbeständigkeit gegenüber Kraftstoffen, Motorenölen sowie Brems- und Kühlflüssigkeiten auf, wie sie im Automobilbereich eingesetzt werden.

Es ist zu sehen, dass die Einspritzöffnungen O1, O1 und O2 bzw. O1, 02 und 03 jeweils im Bereich eines Endes des herzustellenden Formteils 1, insbesondere im Bereich des endständigen radial aufgeweiteten Flanschansatzes 5a bzw. 5 angeordnet sind. Das Einspritzen der polymeren Masse PM durch die Einspritzöffnungen O1, 02, 03 erfolgt dabei in axialer Richtung X-X. Gemäß der Anzahl der Einspritzöffnungen O1, O1 und O2 bzw. O1, 02 und 03 liegt die polymere Masse PMa, PM entweder - wie bekannt - als ein einziger geschlossener Block PMa vor oder ist - erfindungsgemäß - durch aus den unterschiedlichen Einspritzöffnungen O1 und O2 bzw. O1, O2 und O3 eintretende Anteile PM1 und PM2 bzw. PM1, PM 2 und PM3 der polymeren Masse PM gebildet. Beim Einspritzen füllt die polymere Masse PMa, PM jeweils die Kavität K, indem sie gleichzeitig in axialer Richtung X-X und nach zwei Seiten in umfangsgemäßer Richtung fließt. Eine solche Füllung der Kavität K wird auch als Quellfluss bezeichnet. Am Ende des Spritzvorgangs ist die gesamte Kavität K durch die polymere Masse PMa, PM ausgefüllt. Dabei entstehen jeweils Bindenähte 7a, 7.

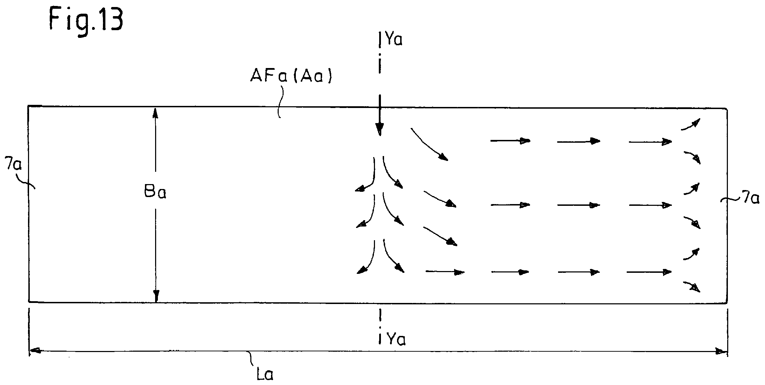

Beim Vergleichs-Formteil 1 a entsteht eine einzige Bindenaht 7a, die in Fig. 13 eingezeichnet ist und der Einspritzöffnung O1 diametral gegenüberliegt.

Bei der ersten Ausführung der Erfindung entstehen zwei Bindenähte 7, die insbesondere gegenüber den Einspritzöffnungen O1, 02 jeweils um 90° umfangsgemäß versetzt sind, sich also wie auch die beiden Einspritzöffnungen O1, 02 einander diametral gegenüberliegen.

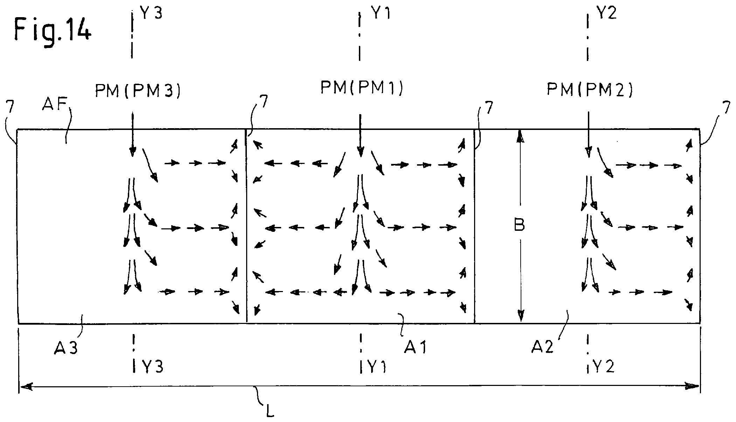

Bei der Ausführung der Erfindung entstehen drei Bindenähte 7, die in Fig. 14 eingezeichnet sind und die insbesondere gegenüber den Einspritzöffnungen O1, 02, 03 jeweils um 60°, also wie auch die drei Einspritzöffnungen O1, 02, 03 auf dem ringförmigen Querschnitt des Formteils 1 umfangsgemäß um 120° zueinander versetzt sind.

Die polymere Masse PMa, PM fließt mit einer Fließfront PFa, PF voran in die Kavität K hinein. Sie erstarrt von der Werkzeugwand weg zu einem im Masseinneren liegenden Kern hin. Solange dieser Kern noch pastös ist, zieht er sich zusammen, was zu einer Volumenkontraktion führt, aber durch die polymere Masse PMa, PM, die durch die Einspritzöffnungen O1, 02, 03 nachgedrückt wird, ausgeglichen wird. Hierbei ist darauf zu achten, dass die technologischen Parameter, wie beispielsweise Temperatur, Druck und Einspritzvolumenstrom, optimal gestaltet werden, damit es nicht - beispielsweise durch eine zu zähe - weil zu kalte - polymere Masse PMa, PM, eine zu kalte, die Kavität K bildende Form, eine falsche Massezusammensetzung usw. - beim Erkalten zu Bindefehlern an den jeweiligen Bindenähten 7a, 7 kommt.

Unter diesem Gesichtspunkt hat es sich als günstig erwiesen, wenn erfindungsgemäß das Einspritzen durch alle Einspritzöffnungen O1, 02, 03 mit jeweils gleichen technologischen Parametern, wie beispielsweise Temperatur, Druck und Einspritzvolumenstrom, erfolgt. So wird eine weitestgehend homogene Temperaturverteilung in der polymeren Masse PM und auch die vorstehend beschriebene symmetrische Ausbildung der Bindenähte 7 gewährleistet.

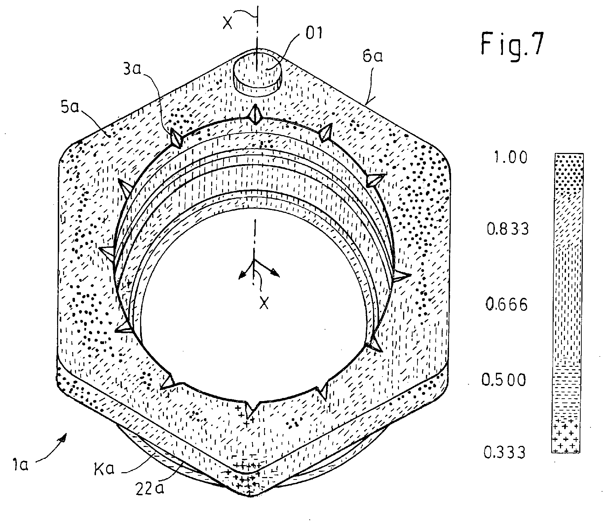

Die Fasern F orientieren sich beim Einspritzen entlang von Fließlinien der plastifizierten polymeren Masse PMa, PM. Dies wird insbesondere durch Fig. 7 bis 9 veranschaulicht, die jeweils Visualisierungen der Orientierung der Fasern F in den verschiedenen Formteilen 1a, 1 wiedergeben.

Hierzu ist in den Figuren ein so genannter Faserorientierungstensor angegeben, der ein Maß dafür darstellt, inwieweit die Faserlängsausrichtung identisch mit der Fließrichtung der polymeren Masse PMa, PM ist. Im rechten Teil der Zeichnung ist jeweils eine Skala für den Faserorientierungstensor angegeben, die von 0,333 bis 1,000 reicht und durch grafische Muster symbolisiert wird. Der obere Wert (Punkte) bedeutet dabei, dass die Faserausrichtung identisch mit der Fließrichtung der polymeren Masse PMa, PM ist, der untere Wert (Kreuze) besagt, dass zwei Drittel der Fasern F in ihrer Orientierung von der Fließrichtung der polymeren Masse PMa, PM abweichen. Dazwischen liegende Werte 0,850 (schräge Striche), 0,666 (senkrechte Striche) und 0,5 (waagrechte Striche) besagen, dass die Fasern F jeweils zu 85 Prozent, 66,6 Prozent bzw. zur Hälfte in Fließrichtung der polymeren Masse PMa, PM orientiert sind.

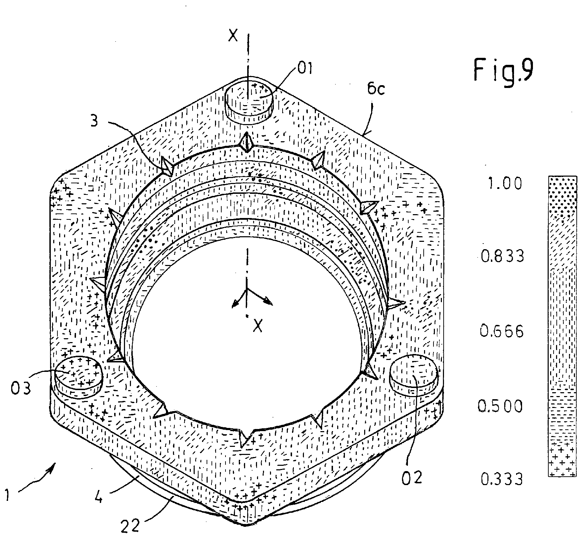

Aus dem Vergleich der Darstellung in Fig. 7 mit der Darstellung in Fig. 9 wird deutlich, dass die Fasern F der erfindungsgemäßen Formteile 1 stärker von der Fließrichtung der polymeren Masse PM abweichen als die Fasern F des dem Vergleich dienenden Formteils 1 a, was das Vorliegen der erfindungsgemäßen Orientierung veranschaulicht, nämlich, dass die Fasern F vorwiegend in entsprechend den Hauptbeanspruchungsrichtungen axialer Zug Z und Torsion T des Formteils 1 ausgerichtet sind. Letzteres wird nachfolgend unter Bezugnahme auf einerseits Fig. 10 bis 12 sowie andererseits Fig. 13 und 14 noch genauer erläutert und ist besonders wichtig für in axialer Richtung schraubbare Befestigungsteile, bei denen beim Schrauben diese Beanspruchungen vorliegen. Gleichzeitig zeigen Fig. 7 bis 9 aber auch, dass die Orientierung der Fasern F in großen Bereichen unidirektional verläuft, d. h. nebeneinander liegende Fasern F weichen in ihrer Orientierung jeweils nur wenig voneinander ab.

Bei dem nicht erfindungsgemäßen Formteil 1a folgt - wie Fig. 7 zeigt - die Orientierung der Fasern F weitestgehend den Fließlinien der polymeren Masse PMa. Es ist insbesondere ein hoher Anteil von Bereichen zu sehen, in denen die Abweichung der Orientierung der Fasern F von den Fließlinien der polymeren Masse PMa nahezu bei Null liegt (gepunktete Bereiche) oder weniger als 15 Prozent beträgt (Bereiche mit schrägen Strichen). Bereiche mit einer darüber hinausgehenden Abweichung der Faserorientierung von den Fließlinien sind anteilmäßig gering. Ein Anteil von Fasern F, die in umfangsgemäßer Richtung des ringförmigen Querschnitts nahezu rechtwinklig zur Längsachse X-X des nicht erfindungsgemäßen Formteils 1a orientiert sind, ist dabei bereichsweise größer als 50 Prozent, und ein Anteil von Fasern F, die etwa in axialer Richtung X-X des Formteils 1a orientiert sind, ist ebenfalls in großen Bereichen größer als 50 Prozent.

Bei dem erfindungsgemäßen Formteil 1 weicht - wie Fig. 9 zeigt - die Orientierung der Fasern F generell im Bereich von 0 bis 70 Prozent, vorzugsweise im Bereich von etwa 15 Prozent (Bereiche mit senkrechten Strichen) bis 50 Prozent (Bereiche mit waagrechten Strichen), vom Verlauf der Fließlinien der polymeren Masse PM ab. Ein Anteil von Fasern F, die in umfangsgemäßer Richtung des ringförmigen Querschnitts rechtwinklig zur Längsachse X-X des erfindungsgemäßen Formteils 1 orientiert sind, ist dabei in allen Bereichen kleiner als 50 Prozent, und ein Anteil von Fasern, die in axialer Richtung X-X des Formteils 1 orientiert sind, ist ebenfalls kleiner als 50 Prozent. Vorzugsweise ist ein Anteil von Fasern F, die in umfangsgemäßer Richtung des ringförmigen Querschnitts rechtwinklig zur Längsachse X-X des erfindungsgemäßen Formteils 1 orientiert sind, kleiner als 40 Prozent, besonders bevorzugt kleiner als 30 Prozent. Dies gilt auch für einen Anteil von Fasern F, die in axialer Richtung X-X des erfindungsgemäßen Formteils 1 orientiert sind.

Fig. 10 zeigt, dass für eine alleinige - nicht erfindungsgemäß vorgesehene - Hauptbeanspruchung auf axialen Zug Z eine optimale Ausrichtung der Fasern F dann vorliegt, wenn alle Fasern F in axialer Richtung X-X des ringförmigen Querschnitts eines Formteils 1a orientiert sind. Diese Orientierung ist jedoch die ungünstigst mögliche im Hinblick auf eine alleinige - ebenfalls nicht erfindungsgemäß vorgesehene - Hauptbeanspruchung auf Torsion T, weil dann bei Torsion T ein Kraftangriff quer zur Faserorientierung erfolgt.

Fig. 11 zeigt statt dessen, dass für eine alleinige - nicht erfindungsgemäß vorgesehene - Hauptbeanspruchung auf umfangsgemäße Torsion eine optimale Ausrichtung der Fasern F dann vorliegt, wenn alle Fasern F in umfangsgemäßer Richtung des ringförmigen Querschnitts schräg zur Längsachse X-X des erfindungsgemäßen Formteils 1 orientiert sind. Diese Orientierung ist jedoch ungünstig im Hinblick auf eine alleinige - wie erwähnt, nicht erfindungsgemäß vorgesehene - Hauptbeanspruchung auf axialen Zug Z, weil dann bei Zug Z ein Kraftangriff quer zur Faserorientierung erfolgt.

Das Vorliegen der erfindungsgemäßen Orientierung der Fasern F veranschaulicht Fig. 12 - nämlich, dass die Faserorientierung durch Kombination der in Fig. 10 und 11 dargestellten Orientierungen gezielt im Hinblick auf eine Beanspruchung durch sowohl Kraftangriff bei axialem Zug Z, als auch bei Torsion T eingestellt ist. Es liegen dementsprechend sowohl Bereiche vor, deren Faserorientierung günstig im Hinblick auf axiale Zugbeanspruchung ist, als auch Bereiche, deren Faserorientierung günstig im Hinblick auf umfangsgemäße Torsion ist. Erreicht wird dies durch das entsprechende Einspritzen in die Kavität K durch mindestens zwei, vorzugsweise drei, oder auch mehr, Einspritzöffnungen O1, 02, 03. Dies wird auch aus der Gegenüberstellung der Darstellungen in Fig. 13 und 14 deutlich.

Fig. 13 visualisiert dabei durch nicht näher bezeichnete, nur in die rechte Hälfte der Figur eingezeichnete Pfeile - wie erwähnt - die Faserorientierung in einer Abwicklung der Mantelfläche AFa des hohlzylindrischen Grundkörpers 4a des zum Vergleich dargestellten Formteils 1a nach Fig. 1. Es ist zu sehen, dass das Einspritzen derart erfolgt, dass die Fasern F in der Abwicklung der Mantelfläche AFa des hohlzylindrischen Grundkörpers 4a des Formteils 1 a in einem einzigen Längenabschnitt Aa der Abwicklung liegen. Die Abwicklung AFa weist dabei eine Breite Ba entsprechend der Höhe Ha des Grundkörpers 4a (in Fig. 10 gezeigt) und eine Länge La entsprechend dem Umfang des Grundkörpers 4a auf.

Der Längenabschnitt Aa besitzt hinsichtlich einer parallel zur Breite Ba der Abwicklung und durch die einzige Einspritzöffnung O1 verlaufenden Mittenachse Ya-Ya eine im Hinblick auf die Orientierung der Fasern F symmetrische Ausbildung. Im Bereich der Mittenachse Ya-Ya des Längenabschnitts Aa und in den beiden zu dieser Mittenachse Ya-Ya parallel verlaufenden Randbereichen 7a des Längenabschnitts Aa sind die Fasern F überwiegend, vorzugsweise zu über 80 Prozent - wie die Pfeile anzeigen und auch durch Fig. 7 verdeutlicht wird - in Richtung des Verlaufs der Mittenachse Ya-Ya des Längenabschnitts Aa orientiert. Durch die Randbereiche 7a des Längenabschnitts Aa ist dabei - wie bereits erwähnt - die Bindenaht 7a gebildet und zwar durch den Block der polymeren Masse PMa, der sich hinter der Einspritzöffnung O1 in der Kavität K in zwei Ströme teilt, die im Bereich der Bindenähte 7a wieder zusammenfließen. In den Bereichen zwischen der Mittenachse Ya-Ya und den Randbereichen 7a des Längenabschnitts Aa sind die Fasern überwiegend, vorzugsweise zu über 90 Prozent rechtwinklig zur Richtung des Verlaufs der Mittenachse Ya-Ya orientiert. Sowohl die eine, als auch die andere Orientierung der Fasern F stellt - insbesondere unter dem Gesichtspunkt, dass die jeweils solchermaßen orientierten Bereiche zwischen der Mittenachse Ya-Ya und den Randbereichen 7a anteilig groß sind - wie anhand von Fig. 10 dargelegt wurde, eine insbesondere hinsichtlich der formteilbedingten Beanspruchung ungünstige Faserorientierung dar.

Fig. 14 visualisiert durch die nicht näher bezeichneten Pfeile die Faserorientierung in einer Abwicklung der Mantelfläche AF des hohlzylindrischen Grundkörpers 4 des erfindungsgemäßen Formteils 1 nach Fig. 3. Es ist zu sehen, dass das Einspritzen derart erfolgt, dass die Fasern F in der Abwicklung der Mantelfläche AF des hohlzylindrischen Grundkörpers 4 des Formteils 1 in drei Längenabschnitten A1, A2, A3 der Abwicklung liegen. Die Abwicklung F weist dabei wiederum eine Breite B entsprechend der Höhe H des Grundkörpers 4 (in Fig. 12 gezeigt) und eine Länge L entsprechend dem Umfang des Grundkörpers 4 auf. Die drei Längenabschnitte A1, A2, A3 sind dabei hinsichtlich der Orientierung der Fasern F etwa gleichartig ausgebildet.

Jeder Längenabschnitt A1, A2, A3 besitzt hinsichtlich parallel zur Breite B der Abwicklung und jeweils durch die Einspritzöffnungen O1, 02, 03 verlaufenden Mittenachsen Y1-Y1, Y2-Y2, Y3-Y3 eine im Hinblick auf die Orientierung der Fasern F symmetrische Ausbildung. Hierbei ist zu verzeichnen, dass im Bereich der Mittenachse Y1-Y1, Y2-Y2, Y3-Y3 eines jeden Längenabschnitts A1, A2, A3 und in zu dieser Mittenachse parallel verlaufenden Randbereichen 7 die Fasern F zu etwa 40 bis 80 Prozent in Richtung des Verlaufs der Mittenachse Y1-Y1, Y2-Y2, Y3-Y3 des jeweiligen Längenabschnitts A1, A2, A3 orientiert sind, wie dies auch aus Fig. 9 hervorgeht. Durch die Randbereiche 7 eines jeden Längenabschnitts A1, A2, A3 ist dabei jeweils eine Bindenaht 7 zwischen den aus den unterschiedlichen Einspritzöffnungen O1, 02, 03 eintretenden Anteilen PM1, PM2, PM3 der polymeren Masse PM (siehe Fig. 6) gebildet.

In den Bereichen zwischen der Mittenachse Y1-Y1, Y2-Y2, Y3-Y3 eines jeden Längenabschnitts A1, A2, A3 und den dazu parallelen Randbereichen 7 sind die Fasern F überwiegend, vorzugsweise zu über 60 Prozent, schräg zur Richtung des Verlaufs der Mittenachsen Y1-Y1, Y2-Y2, Y3-Y3 der Längenabschnitte A1, A2, A3 und damit auch zum Verlauf der parallel verlaufenden Längsachse X-X des Formteils 1 orientiert. Diese Orientierung der Fasern F stellt - wie anhand von Fig. 11 und 12 dargelegt wurde - eine sehr günstige Faserorientierung dar.

Hinzu kommt im Sinne einer Verstärkung dieses Vorteils noch, dass in dem erfindungsgemäßen Formteil 1 - wie Fig. 9 und 12 zeigen - ein Volumenverhältnis der Bereiche, in denen die Fasern F überwiegend schräg zur Richtung des Verlaufs der Längsachse X-X orientiert sind, zu den Bereichen, in denen die Fasern F überwiegend in Richtung des Verlaufs der Längsachse X-X orientiert sind, ausgebildet werden kann, das größer ist als 1, vorzugsweise größer als 2, besonders bevorzugt größer ist als 3. Ein Anteil von Fasern F, die in axialer Richtung X-X des erfindungsgemäßen Formteils 1 orientiert sind, ist kleiner als 30 Prozent.

Ein weiterer, insbesondere technologischer, Vorteil der Erfindung besteht darin, dass der Druckbedarf für eine hundertprozentige Füllung der Kavität K mit zunehmender Anzahl von Einspritzöffnungen O1, 02, 03 fällt. So betrug der Druckbedarf für das in Fig. 1 dargestellte Formteil 1a etwa 1,06 MPa, für das Formteil 1 gemäß Fig. 2 nur etwa 0,94 MPa und für das Formteil gemäß Fig. 3 etwa 0,80 MPa. Außerdem nimmt bei jeweils gleichem Einspritzvolumenstrom die Temperaturdifferenz ab, die an den Fließfronten PFa, PF der polymeren Masse PMa, PM vorliegt, wenn diese zur Bildung der Bindenaht 7a, 7 zusammentreffen. Erfindungsgemäß erfolgt dadurch eine bessere Koaleszenz der polymeren Masse PM, und es stellt sich eine höhere Nahtfestigkeit ein, was sich erhöhend auf die Gesamtfestigkeit des Bauteils auswirkt.

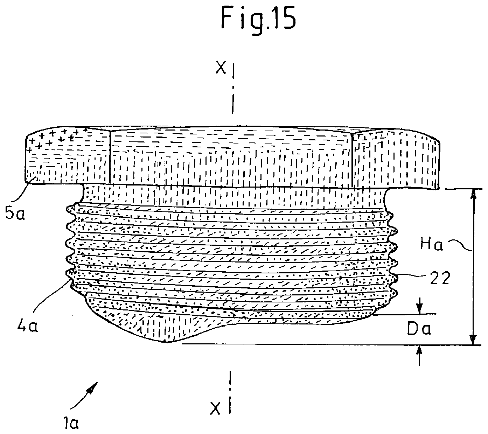

Noch ein weiterer Vorteil der Erfindung wird nachstehend unter Bezugnahme auf Fig. 15 bis 17 erläutert. Es war bereits erwähnt worden, dass ein beim Erstarren auftretender Volumenschwund des Formteils 1 a, 1 durch einen vor der Entnahme aufgebrachten Nachdruck ausgeglichen werden kann. Zu diesem Zweck wurde im vorliegenden Fall bei allen Formteilen 1 a, 1 jeweils ein Druck von etwa 50 MPa mit einer Einwirkzeit von etwa 15 s aufgewendet. Fig. 15 bis 17 zeigen vergleichende Darstellungen von Schwindung und Verzug in Längsrichtung X-X bei den verschiedenen Formteilen 1a, 1, wobei Schwindung und Verzug zur besseren Sichtbarmachung 50-fach überhöht dargestellt sind. Die Darstellungen zeigen, dass Schwindung und Verzug bei den erfindungsgemäßen Formteilen 1 nicht kleiner waren als bei dem zum Vergleich hergestellten Formteil 1a. Jedoch zeigte sich, dass die jeweiligen Differenzen Da, D1, D2 zwischen größter Schwindung und größtem Verzug mit zunehmender Anzahl von Einspritzöffnungen O1, 02, 03 abnahmen und auch homogener über den Umfang verteilt waren. Ein über den Umfang homogenerer Verzug führt zu einer besseren Maßhaltigkeit der Formteile. Erfindungsgemäß sind somit Formteile 1 herstellbar, die nicht nur eine unerwartet hohe Festigkeit aufweisen, sondern auch durch die an Praxisanforderungen besser angepassten und Schadensfällen entgegenwirkenden höheren Materialhomogenitäten gekennzeichnet sind.

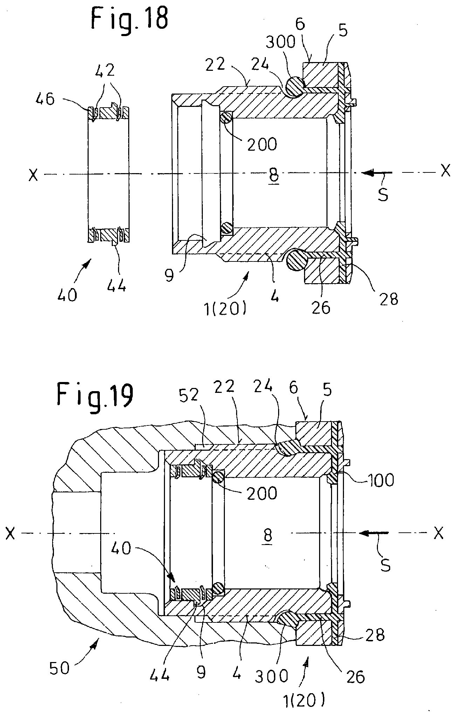

Die in Fig. 18 und 19 im Längsschnitt dargestellte, weitere Ausführung eines erfindungsgemäßen Formteils 1 ist ebenfalls nach einem Spritzgießverfahren gemäß der Erfindung herstellbar. Bei dem Formteil 1 handelt es sich um ein Kupplungsteil einer Steckkupplung für Druckmittelsysteme, die aus zwei Kupplungsteilen besteht, und zwar einem Aufnahmeteil 20, das im vorliegenden Fall durch das erfindungsgemäße Formteil 1 gebildet ist, und einem nicht dargestellten Steckerteil. Das Steckerteil ist mit einem Steckerschaft umfangsgemäß abgedichtet in eine Aufnahmeöffnung 8 des Aufnahmeteils 20 in einer Steckrichtung S einsteckbar und über ein in einer Ausnehmung 9 des Aufnahmeteils 20 einsetzbares bzw. sitzendes Halteelement 40 arretierbar.

Fig. 18 zeigt das Aufnahmeteil 20 und das Halteelement 40 in Einzeldarstellung vor der Montage und Fig. 19 im montierten Zustand, wobei das Aufnahmeteil 20 über sein Außengewinde 22 in ein weiteres Bauteil 50 einschraubbar ist. Das zum Außengewinde 22 des Formteils 1 komplementäre Innengewinde des Bauteils 50 ist mit dem Bezugszeichen 52 bezeichnet.

Das Steckerteil ist im Aufnahmeteil 20 einerseits in einer teilgesteckten, unvollständig abgedichteten Vorraststellung und andererseits in einer ganz gesteckten, vollständig druckdicht abgedichteten Vollraststellung gegen Lösen arretierbar. Dabei hintergreifen in den beiden Raststellungen Rastelemente 42 des Halteelementes 40 jeweils unter Bildung einer Rastverbindung eine Rastkante des Steckerteils. In der Vorraststellung ist erwünschterweise eine Undichtigkeit vorgesehen. Dieser Zustand ist bei Druckbeaufschlagung akustisch durch ein Leckgeräusch wahrnehmbar, ohne dass es jedoch zu einem vollständigen, plötzlichen Druckabfall kommen kann. Die Kupplung kann bei Auftreten des Leckgeräusches weiter in die korrekt abgedichtete und arretierte Vollraststellung überführt werden.

Das Halteelement 40 ist derart ausgebildet und in der Ausnehmung 9 des Aufnahmeteils 20 relativbeweglich angeordnet, dass zumindest in der Vollraststellung mindestens eines der Rastelemente 42 durch eine Verschiebung des Halteelementes 40 entgegen der Steckrichtung S aus einer ungesperrten Position, in der jeweils die Rastverbindung mit dem Steckerteil aufgehoben werden kann, in eine gesperrte Position überführbar ist, in der jeweils die Aufhebung der Rastverbindung formschlüssig unterbunden ist. Zur formschlüssigen Unterbindung der Aufhebung der Rastverbindung ist dabei ein mit den Rastelementen 42 zusammenwirkender Verriegelungsabschnitt 44 vorgesehen, der radial in die Ausnehmung 9 eingreift.

Im Detail ist es so, dass das Halteelement 40 aus einem in der Ausnehmung 9 des Aufnahmeteils 20 sitzenden Klammerkäfig 46 und zwei darin derart radialelastisch verformbar gehalterten und derart axial hintereinander angeordneten Rastelementen 42 besteht, dass die Rastkante des Steckerteils in der Vorraststellung von dem ersten Rastelement 42 und in der Vollraststellung von dem zweiten Rastelement 42 hintergriffen wird. Der Klammerkäfig 46 ist als Ringkörper mit zwei, insbesondere schlitzartigen, Aufnahmeräumen für die Rastelemente 42 ausgebildet.

Im Mündungsbereich der Aufnahmeöffnung 8 des Aufnahmeteils 20 ist eine, insbesondere aus einem Elastomer bestehende, Umfangsdichtung 100 vorgesehen, die zum Abdichten gegen Eindringen von Schmutz, Staub, Feuchtigkeit und dergleichen dient.

Zum Abdichten des Steckerteils in der Aufnahmeöffnung 8 des Aufnahmeteils 20 ist - an das Halteelement 40 angrenzend - in der Aufnahmeöffnung 8 des Aufnahmeteils 20 eine weitere, ebenfalls insbesondere aus einem Elastomer bestehende Umfangsdichtung 200 vorgesehen.

Eine dritte, auch insbesondere aus einem Elastomer bestehende Umfangsdichtung 300 befindet sich auf dem Außenumfang des Aufnahmeteils 20, insbesondere in einer Nut 24 in einem Bereich zwischen dem Grundkörper 4 und dem Flanschansatz 5 des Formteils 1. Diese Umfangsdichtung 300 dient, wie aus Fig. 19 hervorgeht, zum Abdichten der Verbindung zwischen dem Aufnahmeteil 20 und dem weiteren Bauteil 50.

Um zu erreichen, dass das Aufnahmeteil 20 einschließlich der Umfangsdichtungen 100, 200, 300 bei hoher Betriebs- und Funktionssicherheit auf eine vereinfachte und damit preisgünstigere Weise hergestellt werden kann, können das Aufnahmeteil 20, also Grundkörper 4 und Flanschansatz 5, und mindestens eine der Umfangsdichtungen 100, 200, 300 aus unterschiedlichen polymeren Werkstoffen mittels einer Mehrkomponenten-Spritzung geformt und miteinander verbunden sein. Dadurch kann das Aufnahmeteil vorteilhafterweise zumindest nahezu komplett in einer einzigen Fertigungsmaschine bzw. Form gespritzt werden, wobei die entsprechend dem bekannten Stand der Technik vorzusehenden Montageschritte der Bestückung mit separat gefertigten Dichtungen entfallen können.

Bei dem erfindungsgemäßen Verfahren ist zur Herstellung eines solchen Aufnahmeteiles 20 eine Mehrkomponenten-Spritzung vorzusehen, bei der in einer Form zunächst in einer ersten Fertigungsstufe aus einem ersten polymeren Werkstoff, wie vorstehend beschrieben, das Formteil 1 und dann in einer zweiten Fertigungsstufe aus mindestens einem zweiten polymeren Werkstoff eine oder mehr Dichtungen geformt werden, wobei die unterschiedlichen polymeren Werkstoffe die Komponenten der Mehrkomponenten-Spritzung bilden. Im vorliegenden Falls sind zwei Umfangsdichtungen 100, 300 durch eine Mehrkomponenten-Spritzung gebildet, zum Einen die Umfangsdichtung 100, welche zum Abdichten gegen Eindringen von Schmutz, Staub, Feuchtigkeit und dergleichen dient, und zum Anderen die Umfangsdichtung 300 die zum Abdichten der Verbindung zwischen dem Aufnahmeteil 20 und dem weiteren Bauteil 50 eingesetzt wird. Bei der Mehrkomponenten-Spritzung kann dabei vorzugsweise ein Formdorn - oder es können mehrere Formdorne geeigneter Gestalt - umspritzt werden.

Als Vorteil der Erfindung ist hervorzuheben, dass dadurch, dass eine, mehrere oder alle Dichtungen 100, 200, 300 in dem Mehrkomponenten-Spritzverfahren hergestellt wird bzw. werden, mehrere aus gleichem Material oder unterschiedlichen Materialien z. B. benachbart angeordnete Dichtungen hergestellt und adhäsiv miteinander und mit dem Aufnahmeteil 20 - mit Letzerem optional zusätzlich oder alternativ auch formschlüssig - verbunden werden können. So können - wie aus Fig. 18 und 19 hervorgeht - im Grundkörper 4 und/oder im Flanschansatz 5 axial und/oder radial verlaufende Kanäle 26, 28 ausgebildet sein, die durch das die Umfangsdichtungen 100, 300 bildende Material ausgefüllt sind und die Dichtungen 100, 300 verbinden.

Während das Aufnahmeteil 20 bevorzugt aus einem faserhaltigen thermoplastischen oder aber auch duroplastischen Werkstoff bestehen kann, sollten die Dichtungen 100, 200, 300 aus einem oder mehreren elastomeren Werkstoff(en), also aus einem vorzugsweise faserfreien und isotropen Material, wie Kautschuken oder thermoplastischen Elastomeren, bestehen. Besonders bevorzugte Werkstoffe für die Dichtungen 100, 200, 300 sind Fluor- und/oder Silikonkautschuke, aber auch EPDM und/oder Polyurethan (PUR), wie beispielsweise thermoplastisches Polyurethan (TPE-U).

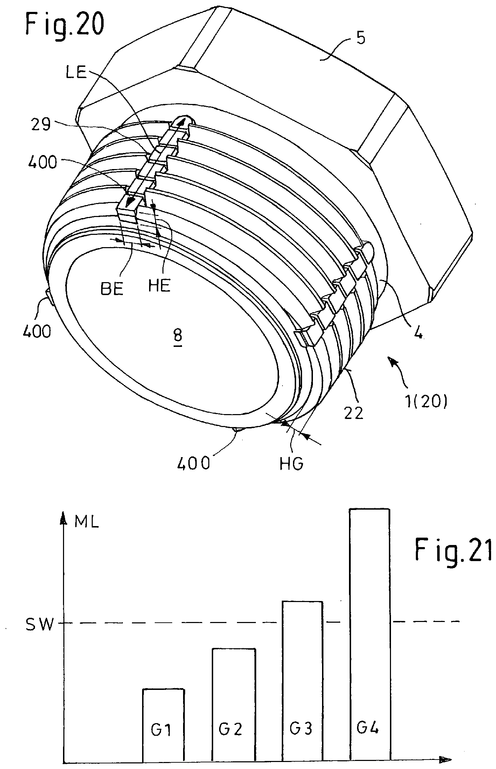

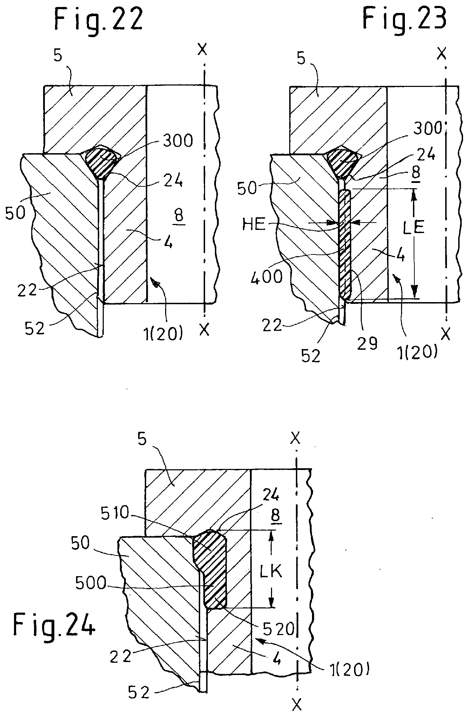

Fig. 20 zeigt eine weitere als Schraubteil sowie auch als Aufnahmeteil 20 ausgebildete Ausführungsform eines erfindungsgemäßen Formteils 1. Die Besonderheit dieser Ausführung, wie auch der Ausführung in Fig. 23, besteht darin, dass an dem Formteil 1 eine spezielle Gewindesicherung 400 für das Gewinde 22 vorgesehen ist.

Gewindesicherungen für Schrauben oder Schraubteile sind an sich bekannt. Bei diesen bekannten Sicherungen wird in das Gewinde des Schraubkörpers eine Nut eingefräst und beispielsweise ein elastisch verformbarer Faden eingepresst. Die spezielle Gewindesicherung 400 für das Gewinde 22 des erfindungsgemäßen Formteils 1 zeichnet sich jedoch abweichend von den bekannten Gewindesicherungen dadurch aus, dass sie nicht als ein Faden, sondern als eine zusammen mit dem Formteil 1 im Mehr-, bzw. im dargestellten Fall insbesondere im Zweikomponenten-Spritzverfahren, hergestellte Einlage mit spezieller Kontur ausgeführt ist. Die Einlage besitzt eine Länge LE, die sich im dargestellten Fall über die gesamte Länge des Gewindes 22 erstreckt. Sie könnte jedoch auch kürzer ausgeführt werden. Die Einlage ist im Querschnitt im Wesentlichen rechteckig, was jedoch kein beschränkendes Merkmal darstellt. Die Länge LE ist mehrfach größer als die Querschnittsabmessungen - Höhe HE, Breite BE - welche wiederum in der Größenordnung einer Höhe HG der Gänge des Gewindes 22 liegen.

Zur Herstellung der Gewindesicherung 400 können thermoplastische Kunststoffe, wie z. B. ungefülltes Polyamid (PA), eingesetzt werden. Mit Vorteil kann aber insbesondere ein Material eingesetzt werden, wie es vorstehend schon als geeignet für die Umfangsdichtungen 100, 200, 300 beschrieben wurde.

Eine, insbesondere axial verlaufende, Nut 29 zur Aufnahme der Gewindesicherung 400 kann in technologisch vorteilhafter Weise spanlos beim Spritzgießen des Formteils 1 geformt werden. Die Nut 29 sollte eine Tiefe TN aufweisen, die etwa genauso groß wie die Höhe HE der Gewindesicherung 400, vorzugsweise jedoch geringfügig kleiner ist, so dass die Gewindesicherung 400 geringfügig über die Gewindeflanken hinaussteht.

Bereits durch eine einzige Gewindesicherung 400 können ein Toleranzausgleich der Gewinde 22, 52 und eine erhöhte Vibrationssicherheit erreicht sowie das Lösen der Schraubverbindung mit einem weiteren Bauteil 50 (Fig. 23) bei dynamischen Belastungen verhindert werden. Dies geschieht, indem beim Einschrauben eines so gesicherten Formteiles 1 durch elastische Deformation der Gewindesicherung 400 eine klemmende Wirkung erzeugt wird. Ein Spielraum zwischen dem Außengewinde 22 des Formteils 1 und dem Innengewinde 52 wird dabei durch die Gewindesicherung 400 ausgefüllt, so dass diese eine erhöhte Flächenpressung zwischen den sich gegenüberliegenden Gewindeflanken erzielt.

Bedarfsweise können zu diesem Zweck auch zwei oder mehr Gewindesicherungen 400 in symmetrischer oder asymmetrischer Anordnung auf dem Grundkörper des Formteils 1 vorgesehen werden.

Obwohl eine solche Verbindung jederzeit gelöst werden kann, behält die gesicherte Verbindung auch nach mehrfachem Ein- und Ausschrauben ihre Zuverlässigkeit. Einem selbständigen Lockern und Lösen des erfindungsgemäßen Formteils 1 im Betriebszustand ist dadurch entgegengewirkt.

Des Weiteren können vorteilhafterweise die Sicherungswirkung sowie die Einschraubdrehmomente der Gewindesicherung 400 an die jeweiligen betriebsbedingten Anforderungen an die Schraubverbindung angepasst werden. So zeigt Fig. 21 eine Gegenüberstellung von Losdrehmomenten ML, welche verschiedene als Schraubteile ausgebildete Ausführungsformen eines erfindungsgemäßen Formteils 1 aufweisen, wenn eine Schraubverbindung des jeweiligen Formteils 1 mit einem weiteren jeweils in den einzelnen Schraubverbindungen gleichen Bauteil 50 gelöst wird. Die Säule G1 bezieht sich dabei auf ein Formteil 1 ohne Gewindesicherung. Die Säule G2 bezieht sich auf ein Formteil 1 mit einer als O-Ring ausgebildeten Umfangsdichtung 300, wie sie in Fig. 22 dargestellt ist und auch schon unter Bezugnahme auf Fig. 18 und 19 beschrieben wurde. Die Säule G3 bezieht sich auf eine Ausführung, wie sie in Fig. 23 gezeigt ist, also auf ein Formteil 1 mit sowohl einer als O-Ring ausgebildeten Umfangsdichtung 300, als auch mit einer zusätzlichen, insbesondere aus Polyamid hergestellten, Gewindesicherung 400. Die Säule G4 bezieht sich auf eine Ausführung, wie sie in Fig. 23 oder Fig. 24 gezeigt ist, wobei Gewindesicherung 400 oder ein Kombinationsteil 500 aus O-Ring und Gewindesicherung aus einem elastomeren Material besteht. Entsprechend einem vorgegebenen Sollwert SW für das Losdrehmoment ML, der beispielsweise bei 3 bis 4 Nm liegen kann, kann eine gezielte Auswahl erfolgen. Darüber hinaus kann das Losdrehmoment ML auch durch die geometrischen Abmaße sowie die Art der Anordnung von Gewindesicherung 400 oder Kombinationsteil 500 eingestellt werden.

Das in Fig. 24 gezeigte, einstückige Kombinationsteil 500 aus O-Ring und Gewindesicherung ist ringförmig ausgebildet und besitzt einen O-Ring-Abschnitt 510 mit etwa kreisförmigem Querschnitt sowie einen an den O-Ringabschnitt 510 zylindrisch angeformten Manschetten-Abschnitt 520, der im Querschnitt in der Grundform etwa rechteckig ist, wie dies der Zeichnung zu entnehmen ist. Der Manschetten-Abschnitt 520 kann auch eine in axialer Richtung X-X verlaufende Schlitzung aufweisen. Eine axiale Länge LK des Kombinationsteils 500 kann bevorzugt etwa dem Zwei- bis Vierfachen des mittleren Durchmessers O-Ring-Abschnitts 510 entsprechen, wobei Letzterer nach den fachüblichen Kriterien zur Auswahl von O-Ring-Schnurstärken ausgewählt sein kann. Das Kombinationsteil 500 wird bevorzugt ähnlich wie der O-Ring 300 der Ausführung in Fig. 18 und 19 in einer rückseitig an dem Flanschabschnitt 5 des Formteils 1 befindlichen Nut 24 angeordnet, wobei sich sein Manschettenabschnitt 520 im montierten Zustand zumindest über einige erste (in Fig. 24 obere) Gewindegänge des Gewindes 52 des Bauteils 50 erstrecken sollte, in das das Formteil 1 eingeschraubt wird.

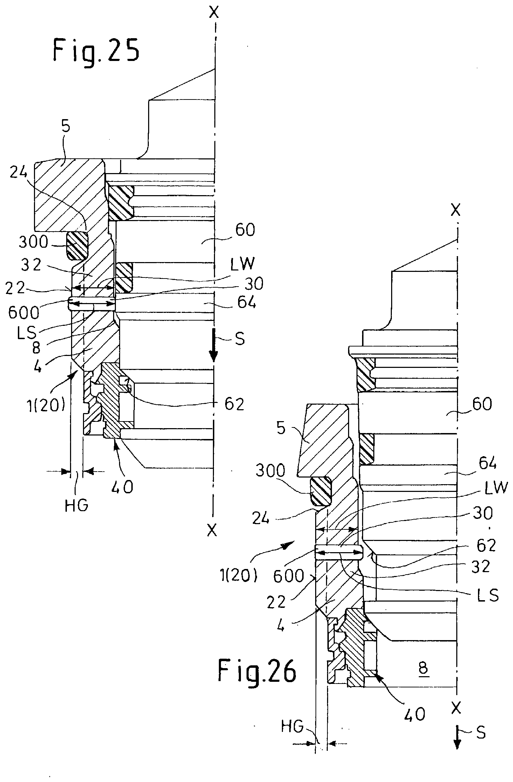

Fig. 25 und 26 zeigen weitere Ausführungsformen eines erfindungsgemäßen Formteils 1, die ebenfalls - ähnlich wie die Ausführung in Fig. 18 und 19 sowie die vorstehend beschriebenen Ausführungen - als Schraubteile mit einem Außengewinde 22 ausgebildet sind, die andererseits jedoch gleichzeitig als Aufnahmeteil 20 zur Herstellung von Steckverbindungen dienen. Das entsprechende Steckerteil ist in diesem Fall dargestellt und mit dem Bezugszeichen 60 bezeichnet. Auch diese Ausführungen weisen eine Sicherung 600 für die Gewindeverbindung 22/52 zwischen dem Formteil 1 und dem Bauteil 50 auf, in das dieses Formteil 1 eingeschraubt wird.

Die Sicherung 600 weicht in ihrer Konstruktion und Funktionsweise von derjenigen der in Fig. 20 und 23 dargestellten Gewindesicherung 400 ab. Während die in Fig. 20 und 23 dargestellte Gewindesicherung 400 eine eher statische Wirkungsweise hat, ist die Wirkungsweise der jeweiligen Sicherung 600 der Ausführungen gemäß Fig. 25 und 26 dynamisch, d. h. die Sicherungen 600 werden während der Montage, insbesondere bei der Herstellung der Steckverbindung zwischen Aufnahmeteil 20 und Steckerteil 60 von einem Passiv- in einen Aktivzustand überführt. Der Aktivzustand der Sicherung 600 ist in Fig. 25 und der Passivzustand in Fig. 26 gezeigt.

Die Sicherung 600 der Ausführungen gemäß Fig. 25 und 26 ist jeweils stiftartig ausgeführt, wobei der stiftartige Sicherungskörper wiederum aus einem elastisch deformierbaren Material wie auch die oben beschriebene Gewindesicherung 300 oder das Kombinationsteil 500 bestehen kann. Die Sicherung 600 durchdringt eine Radialöffnung 30 in der Wandung 32 des Aufnahmeteils 20 und ist dabei darin verschieblich gelagert. Dabei kann eine Übergangspassung vorliegen, so dass die Sicherung 600 nicht aus der Radialöffnung 30 herausfällt. Die Sicherung 600 weist dabei eine Länge LS auf, die etwas größer ist als die Summe aus der Wandstärke LW der Wandung 32 des Formteils 1 im Bereich der Bohrung 30 und der Höhe HG des Gewindes 22.

Im Passivzustand gemäß Fig. 26 ragt die Sicherung 600 radial nach innen in die Aufnahmeöffnung 8 des Aufnahmeteils 20 hinein. Beim Einschieben des Steckerteils 60 in seiner Steckrichtung S wird die Sicherung 600 dann jedoch über eine Konusfläche 62 des Steckerteils 60 radial nach außen gedrückt und dabei in ihrer Funktion zur Erhöhung des Losdrehmomentes ML aktiviert. Hierbei kann bevorzugt vorgesehen sein, dass eine vollständige Aktivierung der Sicherung erst dann eintritt, wenn das Steckerteil 60 seine endgültige Montageposition im Aufnahmeteil 20 erreicht hat, wie dies Fig. 25 zeigt. Der Aktivzustand der Sicherung 600 ist dabei insbesondere dadurch gekennzeichnet, dass die Sicherung 600 in der Radialöffnung 30 derart weit nach außen geschoben ist, dass sie die Höhe HG des Gewindes 22 des Aufnahmeteils 20 überragt oder zumindest bündig mit dieser Höhe HG abschließt. Um dies zu erreichen, kann am Steckerteil 60 eine entsprechend angeordnete durchmesservergrößerte Zone 64 vorgesehen sein, die beim Aufschrauben eines Bauteils 50 auf das Außengewinde 22 des Formteils 1 verhindert, dass die Sicherung 600 in der Radialöffnung 30 wieder nach innen geschoben wird. Die durchmesservergrößerte Zone 64 des Steckerteils 60 kann dabei im Sinne eines optimalen Zusammenwirkens mit der Sicherung 600 und im Sinne einer unbehinderten axialen Beweglichkeit des Steckerteils 60 in der Aufnahmeöffnung 8 des Aufnahmeteils 20 bevorzugt ebenfalls aus einem elastisch deformierbaren Material bestehen. Die Radialöffnung 30 bzw. auch mehrere Radialöffungen 30, um mehrere Stellen vorzusehen, an denen eine Gewindesicherung erfolgt, können entweder ebenfalls bei Spritzgießen des Formteils 1 eingebracht werden oder nach dem Spritzgießen gebohrt werden.

Des Weiteren kann der Fachmann zusätzliche vorteilhafte technische Maßnahmen vorsehen, ohne dass der Rahmen der Erfindung verlassen wird. So kann die sich beim Spritzgießen einstellende Orientierung der Fasern F auch durch eine Variation des Einspritzvolumenstroms gesteuert werden. Es wurde gefunden, dass der Anteil der in Fließrichtung orientierten Fasern F bei geringem Einspritzvolumenstrom geringer ist als bei hohem Einspritzvolumenstrom. Auch wurde gefunden, dass ein ähnlicher Steuereffekt durch die Variation des Faseranteils erzielt werden kann. So ist in dem als bevorzugt angegebenen Bereich von 15 bis 50 Prozent zu beobachten, dass bei dem unteren Wert des Volumenanteils an Fasern F eine stärkere Faserorientierung, d. h. Unidirektionalität der Fasern F, vorliegt als bei dem oberen Wert.

Was das in Fig. 18 und 19 dargestellte Ausführungsbeispiel betrifft, so ist der Grundaufbau einer wie oben beschriebenen Steckkupplung - allerdings ohne im Mehrkomponenten-Spritzverfahren hergestellte Teile - aus der EP 0 913 618 B1 an sich bekannt. Hinsichtlich weiterer Details, die bei der letztbeschriebenen Ausführung der Erfindung vorgesehen werden können, wird daher im vollen Umfang auf dieses Dokument verwiesen. So ist beispielsweise eine kinematische Umkehr derart möglich, dass in den beiden Raststellungen die Rastelemente 42 des Halteelementes 40 unter Bildung einer Rastverbindung auch eine Rastkante des anderen Aufnahmeteils 20 hintergreifen, wobei das Halteelement 40 derart ausgebildet und in einer Ausnehmung des einen Steckerteils relativbeweglich angeordnet ist, dass die vorstehend beschriebenen Rastvorgänge ablaufen können.

Den Ausbildungen des Formteils 1, die die Teile 400, 500, 600 aufweisen, welche der Erhöhung des Losdrehmomentes ML dienen, wird eine eigenständige erfinderische Bedeutung zugemessen.

### Bezugszeichen

- 1: Formteil (erfindungsgemäß)
- 1a: Formteil (nicht erfindungsgemäß)
- 2: Innengewinde in 1
- 2a: Innengewinde in 1 a
- 3: Einkerbung in 1
- 3a: Einkerbung in 1 a
- 4: Grundkörper von 1
- 4a: Grund körper von 1 a
- 5: Flanschansatz von 1 an 4
- 5a: Flanschansatz von 1 a an 4a
- 6: Außenkontur von 5
- 6a: Außenkontur von 5a
- 7: Bindenaht von 1, Randbereich in A1, A2, A3
- 7a: Bindenaht von 1 a, Randbereich in Aa
- 8: Aufnahmeöffnung von 20
- 9: Ausnehmung in 8 von 20 für 40

- 20: Ausführung von 1 als Aufnahmeteil (Fig. 18 bis 20, 22 bis 26)
- 22: Außengewinde an 1
- 22a: Außengewinde an 1 a
- 24: Nut in 20 für 300 (Fig. 18, 19, 22 bis 26)
- 26: axialer Kanal in 20 (Fig. 18, 19)
- 28: radialer Kanal in 20 (Fig. 18, 19)
- 29: Nut in 1 für 400
- 30: Radialöffnung in 20
- 32: Wandung von 20
- 40: Halteelement (zum Einsetzen in 20, Fig. 18, 19, 25, 26)
- 42: Rastelement von 40
- 44: Verriegelungsabschnitt von 40
- 46: Klammerkäfig von 40

- 50: Bauteil (zur Verbindung mit 20, Fig. 19, 22 bis 24)
- 52: Innengewinde von 50

- 60: Steckerteil
- 62: Konusfläche von 60
- 64: durchmesservergrößerte Zone von 60

- 100: erste Umfangsdichtung (in 8, Fig. 18, 19)
- 200: zweite Umfangsdichtung (in 8, Fig. 18, 19)
- 300: dritte Umfangsdichtung (um 20, Fig. 18, 19)
- 400: Gewindesicherung 22/52 (Fig. 20, 23)
- 500: Kombinationsteil (Fig. 24)
- 600: Sicherung 22/52 (Fig. 25, 26)

- Aa: (einziger) Längenabschnitt von AFa
- A1: erster Längenabschnitt von AF
- A2: zweiter Längenabschnitt von AF
- A3: dritter Längenabschnitt von AF
- AF: Mantelfläche von 4
- AFa: Mantelfläche von 4a
- B: Breite von AFa
- Ba: Breite von AFa
- BE: Breite von 400
- F: Faser
- G1: ML für 1 aus 50 (ohne 300, 400, 500)
- G2: ML für 1 aus 50 mit 300
- G3: ML für 1 aus 50 mit 400 (PA)
- G4: ML für 1 aus 50 mit 400 oder 500 (Elastomer)
- H: Höhe von 4
- Ha: Höhe von 4a
- HE: Höhe von 400
- HG: Ganghöhe von 22
- K: Kavität zur Herstellung von 1 a, 1
- L: Länge von F
- La: Länge von Fa
- LE: Länge von 400
- LK: axiale Länge von 500
- LS: Länge von 600
- LW: Wandstärke von 20 im Bereich von 30
- M: Matrix von 1a, 1
- ML: Losdrehmoment 1/50 (Fig. 21)
- O1: erste Einspritzöffnung für K
- O2: zweite Einspritzöffnung für K
- O3: dritte Einspritzöffnung für K
- PF: Fließfront von PM
- PFa: Fließfront von PMa
- PM: polymere Masse zur Herstellung von 1
- PM1: erster Masseanteil von PM, Eintritt durch O1
- PM2: zweiter Masseanteil von PM, Eintritt durch 02
- PM3: dritter Masseanteil von PM, Eintritt durch 03
- PMa: polymere Masse zur Herstellung von 1 a
- S: Stecker-Steckrichtung in 8 hinein
- SW: Sollwert von ML
- T: Torsion
- TN: Tiefe von 29
- X-X: Längsachse von 1, 1 a
- Y1-Y1: Mittenachse von A1 durch O1
- Y2-Y2: Mittenachse von A2 durch 02
- Y2-Y2: Mittenachse von A3 durch 03
- Ya-Ya: Mittenachse von Aa durch O1
- Z: Zug

## Patentansprüche

1. Verfahren zur Herstellung eines Formteils (1) mit rotationssymmetrischem oder zumindest teilweise ringförmigem Querschnitt, wie einer Mutter, eines Muffenteils, eines Rohrsteckers, eines Rohrverbinders oder dergleichen, welches als Schraubteil mit mindestens einem Gewinde (2, 22) ausgebildet ist und einen hohlzylindrischen Grundkörper (4) mit einem endständigen, radial aufgeweiteten Flanschansatz (5) aufweist, wobei eine Fasern (F) enthaltende plastifizierte polymere Masse (PM) durch drei umfangsgemäß um 120 ° zueinander versetzte Einspritzöffnungen (O1, 02, 03) eines Formwerkzeugs, die im Bereich eines Endes des Formteils (1) im Bereich des endständigen radial aufgeweiteten Flanschansatzes (5) angeordnet sind, in mindestens eine Kavität (K) des Formwerkzeugs axial eingespritzt und nach einem Erstarren der polymeren Masse (PM) das Formteil (1) aus dem Werkzeug entformt wird, wobei die plastifizierte polymere Masse (PM) einen Volumenanteil an Fasern (F) im Bereich von 2,5 bis 60 Prozent enthält, wobei die Fasern (F) eine mittlere Länge im Bereich von 0,1 mm bis 1,5 mm aufweisen, so dass sich beim Einspritzen in die Kavität (K) die Fasern (F) vorwiegend entsprechend den Hauptbeanspruchungsrichtungen axialer Zug (Z) und Torsion (T) des Formteils (1) ausrichten, indem ein Anteil von Fasern (F), die in umfangsgemäßer Richtung des ringförmigen Querschnitts rechtwinklig zu einer Längsachse (X-X) des Formteils (1) orientiert sind, kleiner ist als 50 Prozent, und ein Anteil von Fasern (F), die in axialer Richtung (X-X) des Formteils (1) orientiert sind, ebenfalls kleiner ist als 50 Prozent.

2. Verfahren nach Anspruch 1,
**dadurch gekennzeichnet, dass** das mindestens eine Gewinde (2, 22) an dem Formteil (1) als ein Innengewinde (2) oder als ein Außengewinde (22) ausgebildet wird.

3. Verfahren nach Anspruch 1 oder 2,
**dadurch gekennzeichnet**, dassandemFormteil(1)innere Ausnehmungen (3), äußere Ausnehmungen, wie Umfangsnuten und/oder innere Stufen, oder äußere Stufen, wie radiale Vor- oder Rücksprünge, ausgebildet werden.

4. Verfahren nach einem der Ansprüche 1 bis 3,
**dadurch gekennzeichnet, dass** als Fasern (F) isotrope Fasern (F), wie Glasfasern, oder anisotrope Fasern (F), wie Kohlenstoff- oder Aramidfasern, eingesetzt werden.

5. Verfahren nach einem der Ansprüche 1 bis 4,
**dadurch gekennzeichnet, dass** die plastifizierte polymere Masse (PM) einen Volumenanteil an Fasern (F) im Bereich von 15 bis 50 Prozent enthält.

6. Verfahren nach einem der Ansprüche 1 bis 5,
**dadurch gekennzeichnet, dass** die Fasern (F) eine mittlere Länge im Bereich von 0,3 bis 0,7 mm aufweisen.

7. Verfahren nach einem der Ansprüche 1 bis 6,
**dadurch gekennzeichnet, dass** die Fasern (F) einen mittleren Durchmesser im Bereich von etwa 3 bis 35 µm, vorzugsweise im Bereich von 5 bis 15 µm, aufweisen.

8. Verfahren nach einem der Ansprüche 1 bis 7,
**dadurch gekennzeichnet, dass** mit dem Formteil (1) durch eine Mehrkomponenten-Spritzung weitere Teile, wie Umfangsdichtungen (100, 300) und/oder Teile (400, 500), die bei Vorliegen einer Schraubverbindung des Formteils (1) mit einem weiteren Bauteil (5) der Erhöhung eines Losdrehmomentes (ML) des Formteils (1) dienen, stoff- und/oder formschlüssig verbunden werden.

9. Formteil (1) mit rotationssymmetrischem, insbesondere zumindest teilweise ringförmigem, Querschnitt, wie eine Mutter, ein Muffenteil, ein Rohrstecker, ein Rohrverbinder oder dergleichen, welches als Schraubteil mit mindestens einem Gewinde (22) ausgebildet ist und einen hohlzylindrischen Grundkörper (4) mit einem endständigen, radial aufgeweiteten Flanschansatz (5) aufweist, bestehend aus einer polymeren Matrix (M), in welche Fasern (F) in einem Volumenanteil im Bereich von 2,5 bis 60 Prozent eingebettet sind, wobei die Fasern (F) eine mittlere Länge im Bereich von 0,1 mm bis 1,5 mm aufweisen, herstellbar nach einem Verfahren nach einem der vorhergehenden Ansprüche, wobei die Fasern (F) vorwiegend entsprechend den Hauptbeanspruchungsrichtungen axialer Zug (Z) und Torsion (T) des Formteils (1) ausgerichtet sind, indem ein Anteil von Fasern (F), die in umfangsgemäßer Richtung des ringförmigen Querschnitts rechtwinklig zu einer Längsachse (X-X) des Formteils (1) orientiert sind, kleiner ist als 50 Prozent, und ein Anteil von Fasern (F), die in axialer Richtung (X-X) des Formteils (1) orientiert sind, ebenfalls kleiner ist als 50 Prozent.

10. Formteil (1) nach Anspruch 9,
**dadurch gekennzeichnet, dass** die Fasern (F) in einer Abwicklung der Mantelfläche (AF) des hohlzylindrischen Grundkörpers (4) des Formteils (1), welche eine Breite (B) entsprechend der Länge (H) des Grundkörpers (4) und eine Länge (L) entsprechend dem Umfang des Grundkörpers (4) aufweist, in drei, hinsichtlich der Orientierung der Fasern (F) gleichartig ausgebildeten Längenabschnitten (A1, A2, A3) der Abwicklung liegen.

11. Formteil (1) nach Anspruch 10,
**dadurch gekennzeichnet, dass** jeder Längenabschnitt (A1, A2, A3) hinsichtlich einer parallel zur Breite (B) der Abwicklung und durch eine Einspritzöffnung (O1, 02, 03) verlaufenden Mittenachse (Y1-Y1, Y2-Y2, Y3-Y3) eine im Hinblick auf die Orientierung der Fasern (F) symmetrische Ausbildung besitzt.

12. Formteil (1) nach Anspruch 11,
**dadurch gekennzeichnet, dass** im Bereich der Mittenachse (Y1-Y1, Y2-Y2, Y3-Y3) eines jeden Längenabschnitts (A1, A2, A3) und in zu dieser Mittenachse (Y1-Y1, Y2-Y2, Y3-Y3) parallel verlaufenden Randbereichen (7) eines jeden Längenabschnitts (A1, A2, A3) die Fasern (F) überwiegend in Richtung des Verlaufs der Mittenachse (Y1-Y1, Y2-Y2, Y3-Y3) orientiert sind, wobei durch die Randbereiche (7) eines jeden Längenabschnitts (A1, A2, A3) jeweils eine Bindenaht (7) zwischen aus unterschiedlichen Einspritzöffnungen (O1, 02, 03) eingetretenen Anteilen der polymeren Masse (PM) gebildet ist.

13. Formteil (1) nach einem der Ansprüche 9 bis 12,
**dadurch gekennzeichnet, dass** mit dem Formteil (1) durch eine Mehrkomponenten-Spritzung weitere Teile, wie Umfangsdichtungen (100, 300) und/oder Teile (400, 500), die bei Vorliegen einer Schraubverbindung mit einem weiteren Bauteil (5) der Erhöhung eines Losdrehmomentes (ML) des Formteils (1) dienen, stoff- und/oder formschlüssig verbunden sind.

14. Formteil (1) nach Anspruch 13,
**dadurch gekennzeichnet, dass** die weiteren Teile, wie die Umfangsdichtungen (100, 300) und/oder die der Erhöhung des Losdrehmomentes (ML) dienenden Teile (400, 500, 600), aus Kunststoffen, insbesondere aus einem oder mehreren elastomeren Werkstoff(en), wie Kautschuken oder thermoplastischen Elastomeren, vorzugsweise Fluor- und/oder Silikonkautschuk, EPDM und/oder Polyurethan (PUR), wie thermoplastischem Polyurethan (TPE-U), bestehen.

15. Formteil (1) nach einem der Ansprüche 9 bis 14,
**gekennzeichnet durch** eine Ausbildung als Schraubteil mit einem Außengewinde (22), welches vorzugsweise durch eine/die Mehrkomponenten-Spritzung mit Teilen (400, 500) verbunden ist, die bei Vorliegen einer Schraubverbindung des Formteils (1) mit einem weiteren Bauteil (5) der Erhöhung eines Losdrehmomentes (ML) des Formteils (1) dienen.

## Claims

1. Method for producing a moulded part (1) with a rotationally symmetrical or at least partially annular cross section, such as a nut, a collar, a pipe connector, a pipe coupling or the like, which is formed as a screw part with at least one thread (2, 22) and has a hollow-cylindrical main body (4) with a radially flared flange end piece (5), a plasticized polymeric mass (PM) that contains fibres (F) being axially injected through three injection openings (01, 02, 03) of a mould that are circumferentially offset from one another by 120° and are arranged in the region of one end of the moulded part (1), in the region of the radially flared flange end piece (5), into at least one cavity (K) of the mould and, after the polymeric mass (PM) has solidified, the moulded part (1) is removed from the mould, the plasticized polymeric mass (PM) containing a proportion by volume of fibres (F) in the range from 2.5 to 60 percent, the fibres (F) having an average length in the range from 0.1 mm to 1.5 mm, so that during injection into the cavity (K) the fibres (F) align themselves predominantly in the main directions of stress of axial tension (Z) and torsion (T) of the moulded part (1), in that a proportion of the fibres (F) that are oriented in the circumferential direction of the annular cross section at right angles to a longitudinal axis (X-X) of the moulded part (1) is smaller than 50 percent and a proportion of fibres (F) that are oriented in the axial direction (X-X) of the moulded part (1) is likewise smaller than 50 percent.

2. Method according to Claim 1,
**characterized in that** the at least one thread (2, 22) is formed on the moulded part (1) as an internal thread (2) or as an external thread (22).

3. Method according to Claim 1 or 2,
**characterized in that** inner clearances (3), outer clearances, such as circumferential grooves and/or inner steps, or outer steps, such as radial projections or recesses, are formed on the moulded part (1).

4. Method according to one of Claims 1 to 3,
**characterized in that** isotropic fibres (F), such as glass fibres, or anisotropic fibres (F), such as carbon or aramid fibres, are used as the fibres (F).

5. Method according to one of Claims 1 to 4,
**characterized in that** the plasticized polymeric mass (PM) contains a proportion by volume of fibres (F) in the range from 15 to 50 percent.

6. Method according to one of Claims 1 to 5,
**characterized in that** the fibres (F) have an average length in the range from 0.3 to 0.7 mm.

7. Method according to one of Claims 1 to 6,
**characterized in that** the fibres (F) have an average diameter in the range from approximately 3 to 35 µm, preferably in the range from 5 to 15 µm.

8. Method according to one of Claims 1 to 7,
**characterized in that** other parts, such as peripheral seals (100, 300) and/or parts (400, 500) which, when there is a screw connection of the moulded part (1) with another component (5), are used to increase a loosening torque (ML) of the moulded part (1), are connected to the moulded part (1) in a material-bonding and/or form-fitting manner by a multi-component injection moulding process.

9. Moulded part (1) with a rotationally symmetrical, in particular at least partially annular cross section, such as a nut, a collar, a pipe connector, a pipe coupling or the like, which is formed as a screw part with at least one thread (22) and has a hollow-cylindrical main body (4) with a radially flared flange end piece (5), consisting of a polymeric matrix (M), in which fibres (F) are embedded in a proportion by volume in the range from 2.5 to 60 percent, the fibres (F) having an average length in the range from 0.1 mm to 1.5 mm, that can be produced by a method according to one of the preceding claims, the fibres (F) aligning themselves predominantly in the main directions of stress of axial tension (Z) and torsion (T) of the moulded part (1), in that a proportion of the fibres (F) that are oriented in the circumferential direction of the annular cross section at right angles to a longitudinal axis (X-X) of the moulded part (1) is smaller than 50 percent and a proportion of fibres (F) that are oriented in the axial direction (X-X) of the moulded part (1) is likewise smaller than 50 percent.

10. Moulded part (1) according to Claim 9,
**characterized in that**, in a developed projection of the lateral surface (AF) of the hollow-cylindrical main body (4) of the moulded part (1), which has a width (B) corresponding to the length (H) of the main body (4) and a length (L) corresponding to the circumference of the main body (4), the fibres (F) lie in three length segments (A1, A2, A3) of the developed projection that are formed identically with regard to the orientation of the fibres (F).

11. Moulded part (1) according to Claim 10,
**characterized in that**, with regard to a central axis (Y1-Y1, Y2-Y2, Y3-Y3) running parallel to the width (B) of the developed projection and through an injection opening (01, 02, 03), each length segment (A1, A2, A3) has a symmetrical formation with respect to the orientation of the fibres (F).

12. Moulded part (1) according to Claim 11,
**characterized in that**, in the region of the central axis (Y1-Y1, Y2-Y2, Y3-Y3) of each length segment (A1, A2, A3) and in marginal regions (7) of each length segment (A1, A2, A3) running parallel to this central axis (Y1-Y1, Y2-Y2, Y3-Y3), the fibres (F) are predominantly oriented in the direction of the path of the central axis (Y1-Y1, Y2-Y2, Y3-Y3), a weld line (7) being respectively formed between portions of the polymeric mass (PM) that have entered from different injection openings (01, 02, 03).

13. Moulded part (1) according to one of Claims 9 to 12,
**characterized in that** other parts, such as peripheral seals (100, 300) and/or parts (400, 500) which, when there is a screw connection with another component (5), are used to increase a loosening torque (ML) of the moulded part (1), are connected to the moulded part (1) in a material-bonding and/or form-fitting manner by a multi-component injection moulding process.

14. Moulded part (1) according to Claim 13,
**characterized in that** the other parts, such as the peripheral seals (100, 300) and/or the parts (400, 500, 600) which are used to increase a loosening torque (ML), consist of plastics, in particular of one or more elastomeric materials, such as rubbers or thermoplastic elastomers, preferably fluororubber and/or silicone rubber, EPDM and/or polyurethane (PUR), such as thermoplastic polyurethane (TPE-U).

15. Moulded part (1) according to one of Claims 9 to 14,
**characterized by** formation as a screw part with an external thread (22), which is preferably connected by a/the multi-component injection moulding process to parts (400, 500) which, when there is a screw connection of the moulded part (1) with another component (5), are used to increase a loosening torque (ML) of the moulded part (1).

## Revendications

1. Procédé de fabrication d'une pièce moulée (1) dotée d'une section transversale à symétrie de révolution ou au moins partiellement annulaire, comme un écrou, une partie de manchon, une fiche tubulaire, un connecteur tubulaire ou analogue, qui est réalisée en forme de pièce à visser avec au moins un filet (2, 22) et qui présente un corps de base cylindrique creux (4) avec une bride à collerette d'extrémité radialement élargie (5), dans lequel on injecte une masse polymère plastifiée (PM) contenant des fibres (F) axialement dans au moins une cavité (K) d'un outil de moulage à travers trois ouvertures d'injection (01, 02, 03) de l'outil de moulage décalées de 120° l'une de l'autre en périphérie, qui sont disposées dans la région d'une extrémité de la pièce moulée (1) dans la région de la bride à collerette d'extrémité radialement élargie (5) et on démoule la pièce moulée (1) hors de l'outil après la solidification de la masse polymère (PM), dans lequel la masse polymère plastifiée (PM) contient une proportion en volume de fibres (F) comprise dans la plage de 2,5 à 60 %, dans lequel les fibres (F) présentent une longueur moyenne comprise dans la plage de 0,1 mm à 1,5 mm, de telle manière que lors de l'injection dans la cavité (K) les fibres (F) s'orientent principalement de façon correspondante aux directions des sollicitations principales traction axiale (Z) et torsion (T) de la pièce moulée (1), du fait qu'une proportion de fibres (F), qui sont orientées selon la direction périphérique de la section transversale annulaire perpendiculairement à un axe longitudinal (X-X) de la pièce moulée (1), est inférieure à 50 %, et qu'une proportion de fibres (F), qui sont orientées dans la direction axiale (X-X) de la pièce moulée (1), est également inférieure à 50 %.

2. Procédé selon la revendication 1, **caractérisé en ce que** l'on réalise ledit au moins un filet (2, 22) sur la pièce moulée (1) sous la forme d'un filet intérieur (2) ou sous la forme d'un filet extérieur (22).

3. Procédé selon la revendication 1 ou 2, **caractérisé en ce que** l'on réalise sur la pièce moulée (1) des évidements intérieurs (3), des évidements extérieurs, comme des rainures périphériques et/ou des degrés intérieurs, ou des degrés extérieurs, comme des saillies radiales ou des retraits radiaux.

4. Procédé selon l'une quelconque des revendications 1 à 3, **caractérisé en ce que** l'on utilise comme fibres (F) des fibres isotropes (F), comme des fibres de verre, ou des fibres anisotropes (F), comme des fibres de carbone ou d'aramide.

5. Procédé selon l'une quelconque des revendications 1 à 4, **caractérisé en ce que** la masse polymère plastifiée (PM) contient une proportion en volume de fibres (F) comprise dans la plage de 15 à 50 %.

6. Procédé selon l'une quelconque des revendications 1 à 5, **caractérisé en ce que** les fibres (F) présentent une longueur moyenne comprise dans la plage de 0,3 à 0,7 mm.

7. Procédé selon l'une quelconque des revendications 1 à 6, **caractérisé en ce que** les fibres (F) présentent un diamètre moyen compris dans la plage d'environ 3 à 35 µm, de préférence dans la plage de 5 à 15 µm.

8. Procédé selon l'une quelconque des revendications 1 à 7, **caractérisé en ce que** l'on assemble à la pièce moulée (1), par une liaison matérielle et/ou emboîtée, au moyen d'une projection à plusieurs composants, d'autres pièces, comme des joints périphériques (100, 300) et/ou des pièces (400, 500), qui servent à augmenter le couple de desserrage (ML) de la pièce moulée (1) dans le cas d'un assemblage vissé de la pièce moulée (1) avec un autre composant (5).

9. Pièce moulée (1) dotée d'une section transversale à symétrie de révolution, en particulier au moins partiellement annulaire, comme un écrou, une partie de manchon, une fiche tubulaire, un connecteur tubulaire ou analogue, qui est réalisée en forme de pièce à visser avec au moins un filet (22) et qui présente un corps de base cylindrique creux (4) avec une bride à collerette d'extrémité radialement élargie (5), se composant d'une matrice polymère (M), dans laquelle des fibres (F) sont noyées avec une proportion en volume comprise dans la plage de 2,5 à 60 %, dans laquelle les fibres (F) présentent une longueur moyenne comprise dans la plage de 0,1 mm à 1,5 mm, pouvant être fabriquée par un procédé selon l'une quelconque des revendications précédentes, dans laquelle les fibres (F) sont orientées principalement selon les directions des sollicitations principales traction axiale (Z) et torsion (T) de la pièce moulée (1), du fait qu'une proportion de fibres (F), qui sont orientées selon la direction périphérique de la section transversale annulaire perpendiculairement à un axe longitudinal (X-X) de la pièce moulée (1), est inférieure à 50 %, et qu'une proportion de fibres (F), qui sont orientées dans la direction axiale (X-X) de la pièce moulée (1), est également inférieure à 50 %.

10. Pièce moulée (1) selon la revendication 9, **caractérisée en ce que** les fibres (F) sont situées dans un développement de la surface latérale (AF) du corps de base cylindrique creux (4) de la pièce moulée (1), qui présente une largeur (B) correspondant à la longueur (H) du corps de base (4) et une longueur (L) correspondant au périmètre du corps de base (4), dans trois parties de longueur (A1, A2, A3) du développement formées de manière identique en ce qui concerne l'orientation des fibres (F).

11. Pièce moulée (1) selon la revendication 10, **caractérisée en ce que** chaque partie de longueur (A1, A2, A3) possède, par rapport à un axe central (Y1-Y1, Y2-Y2, Y3-Y3) s'étendant parallèlement à la largeur (B) du développement et à travers une ouverture d'injection (01, 02, 03), une configuration symétrique en ce qui concerne l'orientation des fibres (F).

12. Pièce moulée (1) selon la revendication 11, **caractérisée en ce que**, dans la région de l'axe central (Y1-Y1, Y2-Y2, Y3-Y3) de chacune des parties de longueur (A1, A2, A3) et dans des régions de bord (7) de chacune des parties de longueur (A1, A2, A3) qui s'étendent parallèlement à cet axe central (Y1-Y1, Y2-Y2, Y3-Y3), les fibres (F) sont orientées principalement dans la direction du tracé de l'axe central (Y1-Y1, Y2-Y2, Y3-Y3), dans laquelle une soudure de jonction (7) est formée respectivement entre des fractions de la masse polymère (PM) entrées à partir de différentes ouvertures d'injection (01, 02, 03) par les régions de bord (7) de chacune des parties de longueur (A1, A2, A3).

13. Pièce moulée (1) selon l'une quelconque des revendications 9 à 12, **caractérisée en ce que** d'autres pièces, comme des joints périphériques (100, 300) et/ou des pièces (400, 500), qui servent à augmenter un couple de desserrage (ML) de la pièce moulée (1) dans le cas d'un assemblage vissé avec un autre composant (5), sont assemblées à la pièce moulée (1) par une liaison matérielle et/ou emboîtée.

14. Pièce moulée (1) selon la revendication 13, **caractérisée en ce que** les autres pièces, comme les joints périphériques (100, 300) et/ou les pièces (400, 500, 600) servant à augmenter le couple de desserrage (ML), sont constituées de matière plastique, en particulier d'un ou de plusieurs matériau(x) élastomère (s), comme des caoutchoucs ou des élastomères thermoplastiques, de préférence du caoutchouc fluoré ou du caoutchouc silicone, du EPDM et/ou du polyuréthane (PUR), comme du polyuréthane thermoplastique (TPE-U).

15. Pièce moulée (1) selon l'une quelconque des revendications 9 à 14, **caractérisée par** une configuration en forme de pièce à visser avec un filet extérieur (22), qui est assemblée de préférence par une projection à plusieurs composants à des pièces (400, 500), qui servent à augmenter un couple de desserrage (ML) de la pièce moulée (1) dans le cas d'un assemblage vissé de la pièce moulée (1) avec un autre composant (5).
